# EUROPEAN PATENT SPECIFICATION

(11) **EP 0 863 658 B1**
(45) Date of publication and mention of the grant of the patent: **04.08.2004**
(21) Application number: 98301468.9
(22) Date of filing: 27.02.1998
(51) Int. Cl.: H04N 1/21

(54) **Digital integrated apparatus**
Digital integriertes Gerät
Appareil intégré digital

(30) Priority: 05.03.1997 JP 4999397; 05.03.1997 JP 4998997; 05.03.1997 JP 4999097; 05.03.1997 JP 4999297; 06.03.1997 JP 5133697
(43) Date of publication of application: 09.09.1998
(73) Proprietor: Matsushita Electric Industrial Co., Ltd., Kadoma-shi, Osaka-fu, 571-8501 (JP)
(72) Inventor: Hisatomi, Kenji, Moriguchi-shi, Osaka-fu (JP); Takahashi, Naoki, Katano-shi, Osaka-fu (JP); Kuwano, Hideyuki, Kadoma-shi, Osaka-fu (JP); Yamaguchi, Takehito, Hirakata-shi, Osaka-fu (JP); Okada, Yuji, Hirakata-shi, Osaka-fu (JP); Murata, Kazuyuki, Kyontanaba-shi, Kyoto-fu (JP)
(74) Representative: Dempster, Benjamin John Naftel

(56) References cited:
- EP-A- 0 465 818
- US-A- 4 802 018
- PATENT ABSTRACTS OF JAPAN vol. 018, no. 489 (P-1799), 12 September 1994 & JP 06 162093 A (RICOH CO LTD), 10 June 1994
- PATENT ABSTRACTS OF JAPAN vol. 013, no. 053 (E-713), 7 February 1989 & JP 63 245065 A (FUJITSU LTD), 12 October 1988
- PATENT ABSTRACTS OF JAPAN vol. 097, no. 006, 30 June 1997 & JP 09 044515 A (HITACHI LTD;HITACHI COMMUN SYST INC), 14 February 1997
- PATENT ABSTRACTS OF JAPAN vol. 097, no. 005, 30 May 1997 & JP 09 006869 A (OKI ELECTRIC IND CO LTD), 10 January 1997
- PATENT ABSTRACTS OF JAPAN vol. 097, no. 002, 28 February 1997 & JP 08 255105 A (HITACHI LTD), 1 October 1996

## Description

The present invention relates to a digital integrated apparatus, more specifically to a digital integrated apparatus capable of storage and take-out of image data.

So far, proposal has been made of electronic filing system such as those disclosed in the Japanese patent laid-open publication No. 62-219768, for example, capable of storing image data on optical disc, etc. from such sources as paper document, etc.

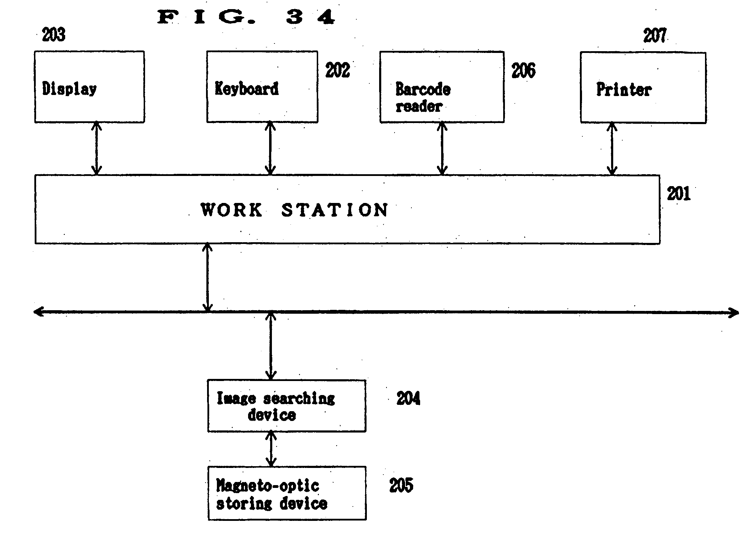

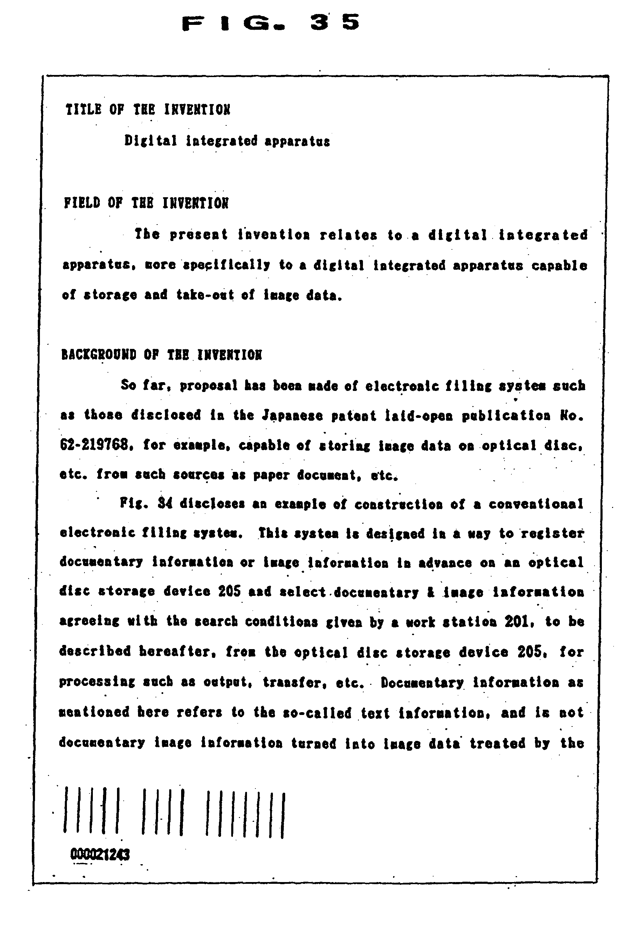

Fig. 34 discloses an example of construction of a conventional electronic filing system. This system is designed in a way to register documentary information or image information in advance on an optical disc storage device 205 and select documentary & image information agreeing with the search conditions given by a work station 201, to be described hereafter, from the optical disc storage device 205, for processing such as output, transfer, etc. Documentary information as mentioned here refers to the so-called text information, and is not documentary image information turned into image data treated by the present invention. The work station 201 is capable of inputting search conditions of documentary image information, displaying selected documentary image information, as well as giving a variety of instructions such as editing, printing, etc. As processing relating to the present invention, said work station can convert ID, identifying address value or document & image corresponding to any specific registered document or image, into image data such as barcode, etc., combined this image data with document & image and print out by using a printer 207. Fig. 35 indicates an example of printed documentary image.

The user has the barcode in this document & image with barcode read by a barcode reader 206, and the work station which received an output from the barcode reader 206 decodes the barcode and obtains address or ID of the document concerned. By using this address or ID, the electronic filing system 204 searches the corresponding documentary image in the optical disc storage device.

This makes it possible for the user to search the target document & image easily.

Moreover, said barcode can be also utilized in a way as described below. Namely, proposal is also made, in the Japanese patent laid-open publication No. 6-233082, for example, of a method for taking out documentary image (which means document turned into image, here) stored in an image information processing system from a distant place by using facsimile.

Namely, first, the user has said documentary image with barcode read by using a reading means in a distant place, and obtains a document ID by decoding said barcode. Next, he transmits this document ID, by facsimile, to an image information processing system storing the documentary image corresponding to that document ID. And then, the document is returned from the image information processing system to the facsimile system which previously transmitted the document ID.

Furthermore, the Japanese patent laid-open publication No. 5-328065 discloses a so-called editing process for mutually combining or deleting a plural number of image files stored in an image information processing system.

In the case where the construction of the electronic filing system indicated in said Japanese patent laid-open publication No. 62-219768 is applied to a digital integrated apparatus having a filing function, the barcode corresponding to the address or ID identifying a document is combined in a documentary image and this barcode is read by a barcode reader for taking out the image data from the file.

Therefore, this method requires a separate barcode reader and increases cost. Moreover, when taking out a large number of filed image data, it is necessary to make the barcode reader read said identification code (barcode) in volume equal to the volume of documents to be taken out, and this is a very troublesome operation. Furthermore, when storing images, the user must add keyword, etc. for the storage, and this method becomes impracticable because of poor operability with an integrated apparatus without sufficient user interface, such as personal computer, etc.

In addition, with the electronic filing system disclosed in said Japanese patent laid-open No. 62-219768, said barcode is printed always at a fixed position, regardless of the form used and, even in the case of change of the form, the printing cannot be made at a position considering the sheet size.

Moreover, in the method for obtaining the target documentary image from a facsimile in a distant place proposed in said Japanese patent laid-open publication No. 6-233082, the system in the distant place must be provided with a decoder for decoding said barcode without fail because the data transmitted by the facsimile in a distant place is a document ID.

Furthermore, the editing method of image data indicated in the Japanese patent laid-open publication No. 5-328065, which reads out the image forming the subject of editing on a display for working, presented a difficulty of operation in the case of a large image data size. JP-A-63 245 065 discloses sending and receiving a fax document, the document has an ID which is registered.

The object of the present invention, proposed in view of said conventional circumstances, is to provide a digital integrated apparatus capable of obtaining sheet (called cover original) provided with document ID mark together with target documentary image as set out in the appended claims.

Moreover, the present invention aims at providing a digital integrated apparatus capable of transmitting target documentary image by facsimile, based on a document ID obtained by reception of facsimile with simple equipment.

Another object of the present invention is to provide a digital integrated apparatus that reduces decoding error of document ID mark to a minimum by enabling printing of document ID at a position corresponding to the size of the printing form.

Still another object of the present invention is to provide a digital integrated apparatus that enables easy compounding or deletion of documents.

Yet another object of the present invention is to provide a digital integrated apparatus that enables easy setting of the number of copies of said cover original or other documentary images.

Viewed from one aspect the invention provides a digital integrated apparatus for storing and printing documentary image data, the apparatus comprising printer means, documentary image input means, storing means for storing documentary image data input thereto from the input means, the documentary image data corresponding to a specific document, the documentary image data of the specific document having attached thereto by the apparatus data representing a document IDto uniquely identify the documentary image data of the specific document in the storing means, document ID mark generating means for generating image data in respect of a unique document ID mark to be printed on the document, the document ID mark corresponding to the document ID data of the document, document management means arranged to specify based on the document ID data a document to be printed by the printer means, pattern synthesising means for synthesising the documentary image data corresponding to the document ID data specified by the document management means with the image data of the document ID mark corresponding to the document ID data specified by the document management means, into combined data representing a combined image to be printed by the printer means, the apparatus being arranged such that the printer means is arranged to print part of the combined data, while another part of the documentary image data of the same document is being input and stored in the storing means.

Conceivable as said documentary image input means include image reading means such as scanner, etc., facsimile receiving means and printed image receiving means that receives commands to print out document from computer.

The documentary image with document ID mark (cover original) may be either a specific page (1st page for example) of said specific document or a documentary image corresponding to the attribute information of said specific document.

Conceivable as printing form by printer means at the time of said storing of documentary image are a variety of modes such as a case where only said cover original is printed out, or a case where the full page including said cover original is printed out, and so forth. When storing the documentary image at the time of transmission by facsimile, only the cover original is printed.

In the present invention, the document ID mark attached to said cover original can be used for selecting the documentary image of the corresponding document ID, as it is decoded by a document ID decoding means. By this selection, it becomes possible to make processing such as take-out (although "take-out" implies "print out" in this situation, the word "take-out" will be used hereinafter to distinguish from the mere act of "print out.") of documentary image, transmission by facsimile, compounding of a plural number of documents, deletion of specific documentary image, etc.

The document ID mark printed at a fixed position of the sheet can be decoded easily by the document ID decoding means, with minimal decoding error. Therefore, the document ID mark printed on said cover original shall preferably be combined at a fixed position of the form.

If, when a series of mutually related documentary images is stored in the storing means , their mutual relation is indicated, this facilitates operations such as take-out by the user, etc. Therefore, if, in the storing operation, the document ID managed by the document management means and the document ID to be input later are identical, the two documentary images are furnished with a symbol showing mutual linkage between them as attribute. Such mutually linked documentary images are displayed in a list and submitted to selection by the user, in the take-out process, for example.

Operations which can be made by using a document ID obtained from said document ID mark, or a document ID input by using a dialogue type operating means include, in addition to said take-out of document, copying or moving from a specific type of storing means to other specific type of storing means, compounding of a plural number of documentary images, or deletion of specific documentary image, etc.

Those processes are enabled by showing a documents list on a control panel constituting the dialogue type operating means .

It is also possible to return, by using said document ID mark obtained from a facsimile system in a distant place, corresponding documentary image to said facsimile system.

With the above-described construction, the user can not only make copying, fax reception, fax transmission, remote printing and automatic filing but also obtain documentary image provided with document ID mark, without making any particular operation for filing of original image. The position on the form of this document ID mark is determined automatically.

Moreover, with a scanner unit that reads documentary image with document ID mark, the user can easily take out the whole of the original documentary image data stored. Furthermore, even in the case where there exist a plural number of documentary images which he wishes to take out, he can take out such plural number of documentary images collectively, by placing a plural number of originals with document mark on ADF.

Still more, with a scanner unit that reads image with document ID mark, it becomes possible to transmit stored original documentary image data by facsimile easily. And even in the case where there exist a plural number of documentary images to be transmitted by fax, it is possible to collectively transmit a plural number of stored images by fax, by placing a plural number of originals with document ID mark on ADF. Yet more, even when said documentary image with document ID mark is sent from a remote facsimile, documentary image data corresponding to that document ID can be transmitted in return.

The setting of the number of copies of documentary image with documentary ID mark or other documentary image, necessary at the time of registration or take-out of documentary image as described above, can be made freely.

In addition, this digital integrated apparatus can perform moving & copying from HDD to magneto-optic disc, which is a removable medium, easily and can also perform moving & copying of a plural number of documents by having images with document ID mark read by a scanner unit. It can further perform control of documentary image data moved to a removable medium.

Moreover, this digital integrated apparatus improves operability because, when taking out documentary image data stored in a removable medium, it can identify the medium ID of the medium and inform it to the user, even in case it became unclear in which medium that documentary file concerned is stored.

Furthermore, the digital integrated apparatus according to the present invention makes it possible, when filing previously filed document original again by adding hand-written memo or comment, etc. to it, to memorize that history of change as link information, thus enabling version control of filed documents.

When taking out document by using said version control function, it is possible to take out related document by specifying it with reference to that link information.

Compounding or deletion of documentary image data can also be executed freely.
Fig. 1 is a block diagram of the main part of the digital integrated apparatus according to the present invention.
Fig. 2 is a block diagram showing the image signal line of the digital integrated apparatus according to the present invention.
Fig.3 is a side perspective view showing an approximate structure of the digital integrated apparatus according to the present invention.
Fig. 4 is a state drawing of the control panel at the time of authentication by the user.
Fig. 5 is a drawing of the image of a original for copying in which a document ID mark is composed.
Fig. 6 is a drawing of the image of a original for copying in which a large sized document ID mark is composed.
Fig. 7 is an explanatory drawing of the contents of document attribute table.
Fig. 8 is a drawing showing the state of the control panel at the time of mode selection.
Fig. 9 is a drawing showing the state of the control panel at the time of copying.
Fig. 10 is a drawing showing the state of the control panel at the time of transmission by facsimile.
Fig. 11 is a flow chart of copying at the time of printing output of one copy.
Fig. 12 is a flow chart of copying at the time of printing out of a plural number of copies.
Fig. 13 is a flow chart of reception by fax and returning by fax.
Fig. 14 is a flow chart of determination of document ID.
Fig. 15 is a flow chart for taking out document.
Fig. 16 is a flow chart showing general copying.
Fig. 17 is a flow chart showing the procedure of combination of documents.
Fig. 18 is a flow chart showing the procedure of deletion of documents.
Fig. 19 is a drawing showing an example of indication of document history in the case of presence of link information.
Fig. 20 is a drawing showing the state of the control panel at the time of take-out of document.
Fig. 21 is a drawing showing the state of the control panel at the time of mode selection in the handling of stored document.
Fig. 22 is a drawing showing the state of the control panel at the time of moving of file.
Fig. 23 Fig. 20 is a drawing showing the state of indication on the control panel of alarm message.
Fig. 24 is a drawing showing the state of the control panel at the time of copying of file.
Fig. 25 is a drawing showing the state of indication on the control panel at the time of take-out of document.
Fig. 26 is a construction drawing of link information in a document on the attribute management table.
Fig. 27 is a construction drawing of link information in a document on the attribute management table.
Fig. 28 is a construction drawing of link information in a document on the attribute management table.
Fig. 29 is a conceptual drawing showing the contents of the mark position table.
Fig. 30 is a conceptual drawing showing the size of form and the contents and direction of document.
Fig. 31 is a drawing showing the state of the control panel for inputting the contents and direction of document.
Fig. 32 is a conceptual drawing showing an example of document ID mark position.
Fig. 33 is a conceptual drawing showing an example of documentary image provided with document ID mark.
Fig. 34 is a block chart showing a conventional example.
Fig. 35 is a conceptual drawing showing a document provided with barcode by conventional art.

An embodiment of the present invention is explained based on drawings as follows.

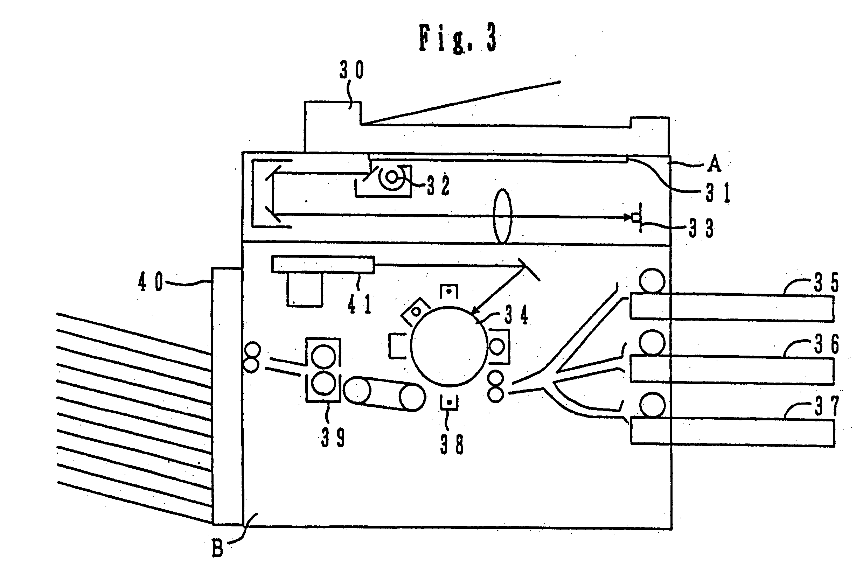

Fig. 3 is a side sectional view showing an approximate structure of a digital integrated apparatus to which is applied the present invention. A plural number of originals loaded on the automatic document feeder (hereinafter abbreviated as ADF) in the image scanner unit A are placed facing downward one by one on a original stand 31 by said ADF 30, and scanned sequentially. This scanning is made by irradiation of light from an exposure lamp 32, and the reflected light from the original is focused on an image sensor 33 through various kinds of mirror and lens.

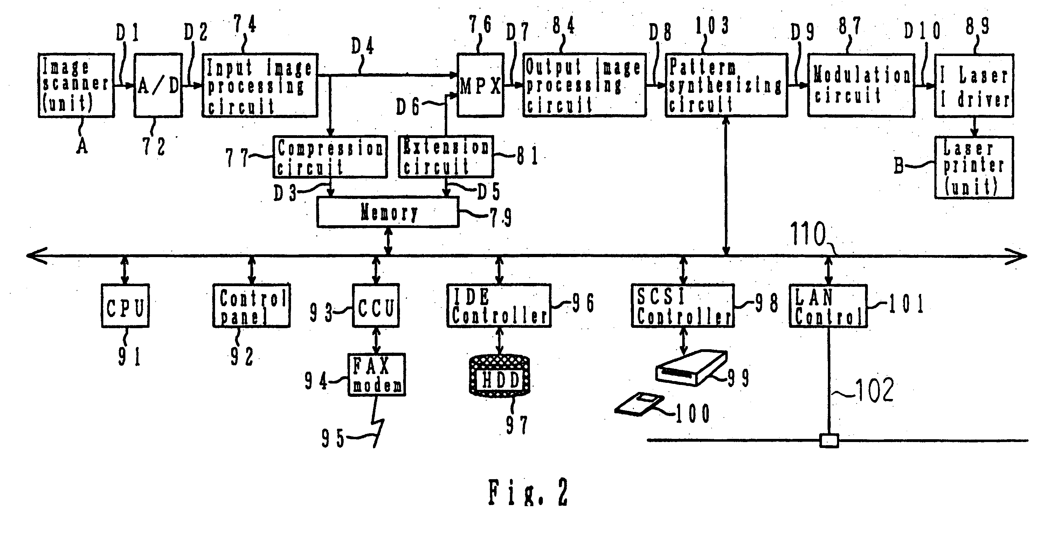

In the laser printer unit B, an electrostatic latent image is formed on a light-sensitive drum 34 by laser light irradiated from a laser scanner unit 41, and this electrostatic latent image adsorbs toner to form a toner image on the light-sensitive drum 34. This toner image is transferred on the recording paper fed by recording paper cassettes 35, 36, 37, etc. by an electric field generated by a charger 38, and the toner on said recording paper is fixed on the recording paper by a fixing unit 39, and the paper is discharged on a sorter 40, etc. Fig. 2 is a block diagram showing the image signal line of the digital integrated apparatus to which is applied the present invention. The analogue image signal D1 output from the image sensor 33 of said image scanner unit A indicated in Fig. 3 is converted by an A/D converter 72 into a digital image signal D2, and input in an input image processing circuit 74. This input image processing circuit 74 performs multivalued image signal processing including gradation correction & MTF correction, and binary processing including pseudo halftone processing, and inputs a binary image signal D4 in a compression circuit 77. This compression circuit 77 inputs a documentary image data D3, in which said binary image signal D4 is compressed in real time by such systems as MH, MR, MMR, JBIG, etc., in a memory 79. Moreover, said compression circuit 77 can also output said binary image signal D4 as non compressed (without coded signal) documentary image data D3.

Said memory 79, which is also connected to a CPU bus 110, stores said documentary image data and work data including the program of the CPU 91. An expansion circuit 81 decodes the documentary image data stored in the memory 79, and outputs it as a binary image signal D6. A multiplexer 76 selects either one of said binary image signal D4 or said binary image signal D6, and outputs a binary image signal D7. An output image processing circuit 84 performs conversion of binary image signal D7 into multivalued image signal as well as gamma control for correcting output gradation characteristics, and inputs a multivalued image data D8 in a pattern synthesizing circuit 103.

Said pattern synthesizing circuit 103 combines bit map image data such as document ID mark, etc. generated by the CPU 91 as explained hereafter, stored in a bit map memory provided on this pattern synthesizing circuit 103, on said multivalued image data D8, and outputs a synthesized image data D9. The pattern synthesizing circuit 103 can select either making output by combining the image in the bit map memory by setting from the CPU 91 or making output without synthesis. A PWM modulation circuit 87 submits the synthesized image data D9, which is a multivalued image, to pulse width modulation and outputs a PWM modulation signal D10 and, based on this PWM modulation signal D10, a laser driver 89 drives the semiconductor laser in the laser printer unit B.

In said construction, the multiplexer 76 selects the binary image signal D4, which is an output of the input image processing circuit, and synchronously performs reading of original by the image scanner unit A and the formation of image in the laser printer, thus enabling real-time copying of the original image.

A control panel 92 connected to the CPU bus 110 is provided with a LCD display with touch panel, a plural number of input keys and a magnetic guard leader (not illustrated), and serves as interface between this digital integrated apparatus and the user.

A communication control unit (CCU) 93 connected to the CPU bus 110 controls a FAX modem connected to the public circuit 95, and performs facsimile communication under the control of the CPU 91. Moreover, a LAN controller 101 connected to the CPU bus 110 performs, through a local area network (LAN) 102, communication with equipment such as personal computer, etc. connected to this LAN 102. Furthermore, an IDE controller 96 connected to the CPU bus 110 controls a hard disc (HDD) 97, and, under the control of the CPU 91, performs storing & access of data on the HDD 97. In addition, a SCSI controller 98 connected to the CPU bus 110 controls a magneto-optic disc drive 99 and, under the control of the CPU 91, performs storing & access of data on the magneto-optic disc 100.

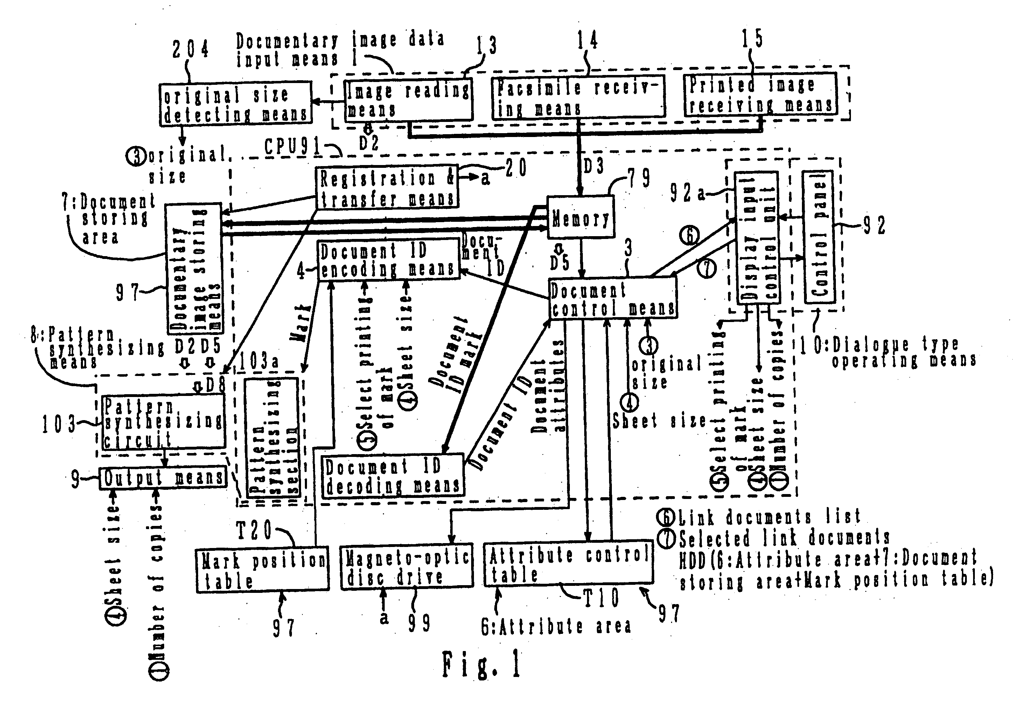

Fig. 1 is a functional block diagram showing mainly the function of said CPU 91. The documentary image input means 1 is composed of an image reading means 13 comprising said image scanner A and its control mechanism, a facsimile receiving means 14 comprising a facsimile unit (CCU + FAX modem) and its control mechanism, and a printed image receiving means 15 comprising a LAN controller 101 and its control mechanism. Here, said respective control mechanisms are taken charge by the CPU 91.

The CPU 91 is further provided with the functions described below. The registration & transfer means 20 either registers (stores) documentary image data obtained from the documentary image input means 1 on the HDD 97, or transfers documentary image data stored on the HDD 97 to specified equipment (laser printer B, FAX model 94, magneto-optic disc drive 99). The document ID encoding means 4 generates document ID at the time of documentary image input, the document ID decoding means 5 obtains document ID from the document ID mark to be described later, while the document management means 3 performs generation and control of attribute data corresponding to the respective documentary images registered on the HDD 97. Moreover, the control mechanism of said pattern synthesizing circuit 103 and the control mechanism of the laser printer B (output means 9 in FIg. 1 includes laser driver 89, laser printer 13 and control mechanism) are also taken charge by the CPU 91. Furthermore, (the CPU 91) is also provided with a display & input control means 92a to constitute a dialogue type operating means 10 capable of displaying matters necessary for the operation on the control panel 92 and enabling input of necessary matters by the user.

### [Copying (1st sheet)]

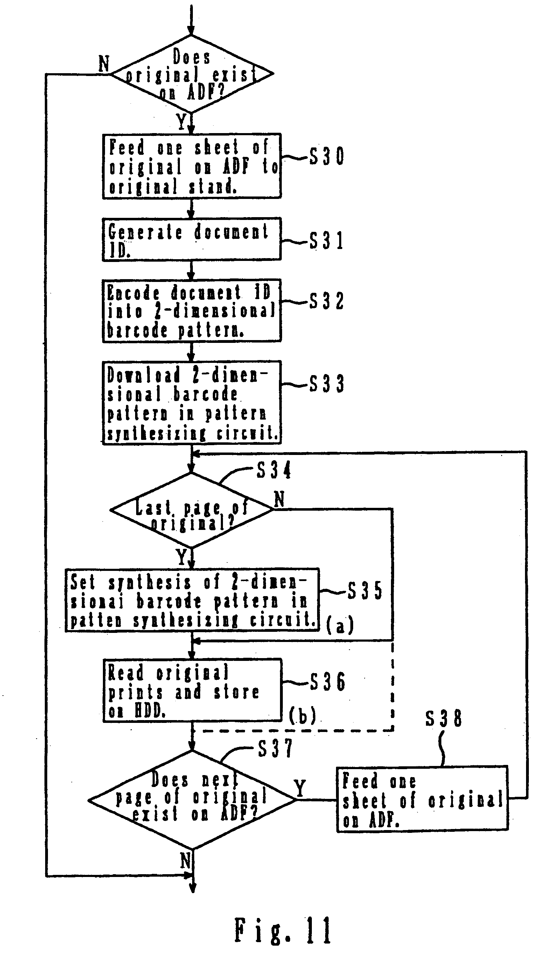

Next, explanation will be given hereafter on the case where, in a digital integrated apparatus of said construction, filing (storage) of documentary image data is performed together with copying of original, based on drawings. Fig. 1 is a block diagram of the main part of the digital integrated apparatus according to the present invention, while Fig. 11 is a flow chart of copying for copying one sheet of a plural number of sets of original placed on the ADF 30.

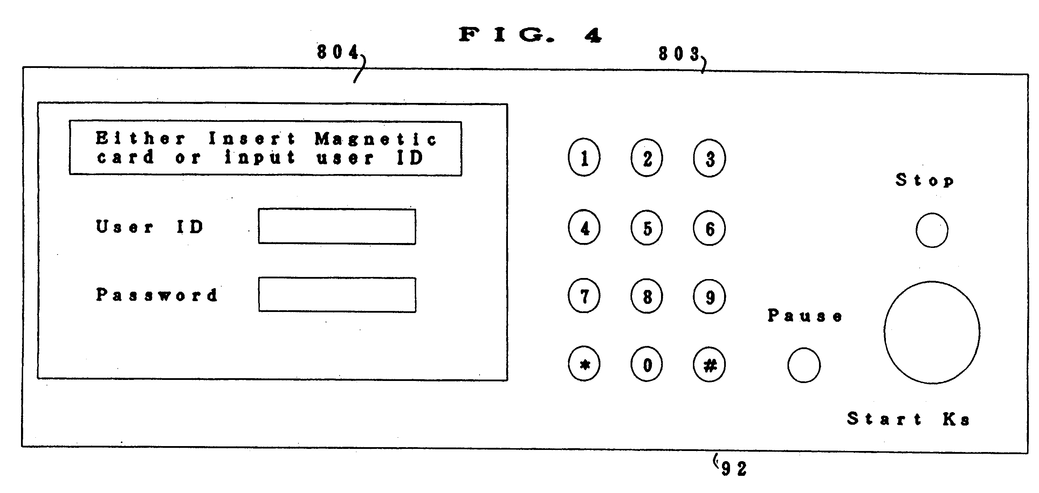

Firstly, said control panel 92, serving as interface between the user and the CPU 91, is realized in a way to make it possible to input prescribed items by using a plural number of keys 803 such as ten keys or item input frame 804, etc. displayed on the control panel 92, as shown in Fig. 4 for example, and this control panel 92 and the display & input control means 92a of the CPU 91 constitute a dialogue type operating means 10 as described earlier.

Here, the user performs user authentication, through the picture indicated on the control panel 92 as disclosed in Fig. 4, by inputting user ID and password registered in advance. This user authentication can also be made by having a card reader connected to said control panel 92 read a preregistered magnetic card. As concrete method of user authentication, there are a variety of methods including those which are already of public knowledge, but detailed explanation on this method will be omitted here because that is not the essential point of the present invention.

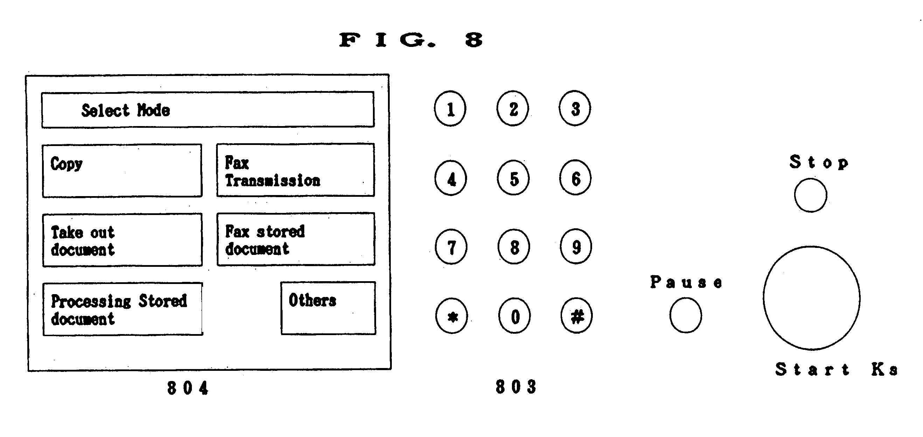

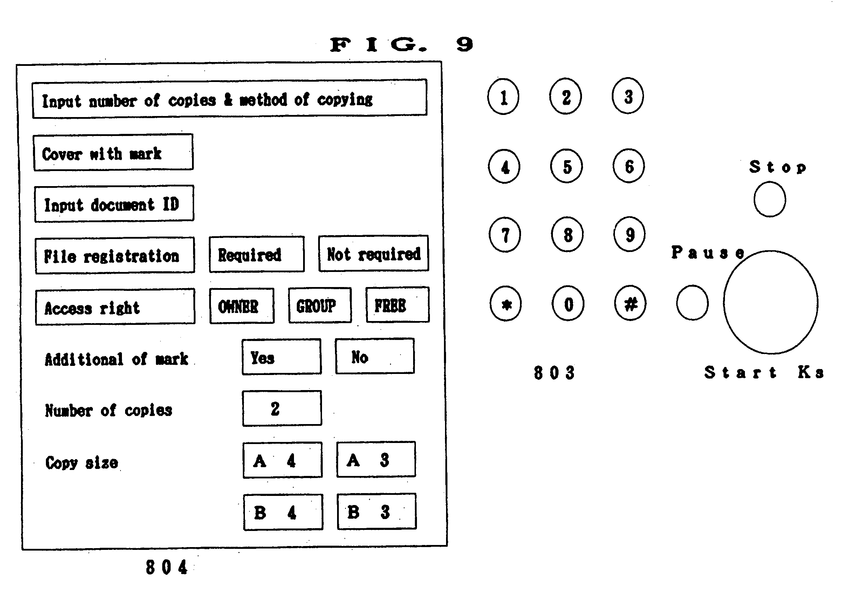

As said user authentication is made, the mode selecting picture indicated in Fig. 8 appears on the control panel 92. Here, the user selects "COPY" mode on the control panel 92, places the original to be copied on the ADF 30, and then selects whether the "registration" in file is necessary or not (whether or not to store the data in HDD 97). After setting "access right" of documentary image data and the "number" of copies, "size" of copying paper and "zoom ratio," etc. from the picture indicated in Fig. 9 presses the start key Ks. A case of use of the columns "cover with mark" or "input document ID" in Fig. 9 will be explained later. Moreover, the image reading means 13 indicated in Fig. 1 is composed of said ADF 30 and its control means (mechanical control section of CPU 91).

Said access right is selectable as either "OWNER" allowing access to registered documentary image file for example only to the user who registered the documentary image file, "GROUP" allowing access to a plural number of registered users, or "FREE" allowing access to any optional user.

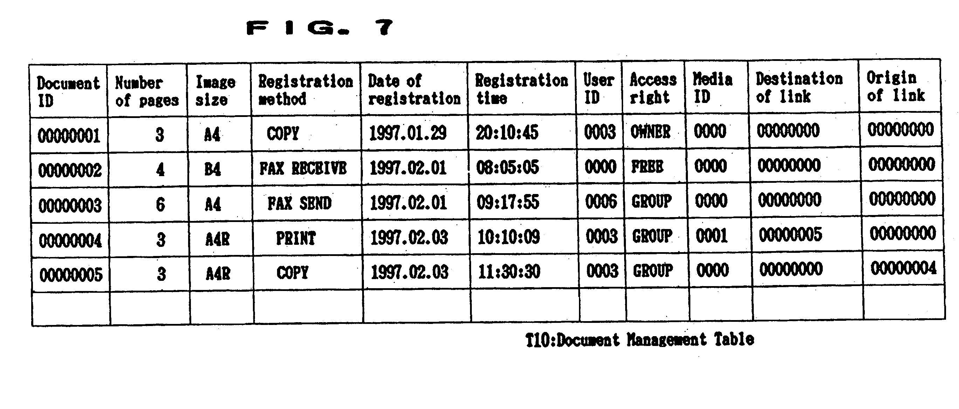

When the start key Ks is pressed as mentioned earlier, said image reading means 13 constituting the CPU 91 feeds the original placed on said ADF 30 one by one onto the original stand 31 from the last page of the original (Fig. 11, step S30). Moreover, when the start key Ks is pressed, the data requiring access right, etc. set on said dialogue type operating means 10 indicated in Fig. 1 (Fig. 9) is notified to the document management means 3, to form an attribute management table T10(Fig. 7) as explained hereafter. Furthermore, it is so arranged that, as said start key Ks is pressed, the number of output copies is set on the output means 9 (including laser printer B and its control unit).

On the other hand, at the point in time when said original is fed by one sheet, the document management means 3 starts working, and generates a document ID constituted by an in-equipment ID consisting of an 8-digit figure, etc. for example and an equipment ID consisting of a 6-digit figure, etc. corresponding to the documentary image data to be filed, from that original (step S31). This document ID is notified to the document ID encoding means 4, to generate a document ID mark which is a 2-dimensional image pattern, for example, there (step S32).

The document ID mark generated this way is stored in the bit map memory provided in the pattern synthesizing circuit 103 (see Fig. 2) constituting the pattern synthesizing means 8 (pattern synthesizing control unit 103a + pattern synthesizing circuit 103), to generate a document having a document ID mark to be explained later (step S33).

Following said reading of original, said image scanner unit A constituting the image reading means 13 and said laser printer unit B constituting the output means 9 start working synchronously for processing, and the multiplexer 76 selects the binary image data D4 which is an output of the input image processing circuit 74, to perform copying of the original fed to the original stand 31 and, at the same time, the compression circuit 77 encodes the binary image data D4 in real time and stores it in the memory 79.

The encoded documentary image data for one page once stored in the memory 79 this way is stored one after another in the document storing area 7 of the HDD 97 by the registration & transfer means 20 through the IDE controller 96 (step S36). Here, the storage of one page of documentary image data in said HDD 97 and the storage of the next encoded documentary image data in the memory 79 can be processed in parallel.

Said image reading means 13 instructs feed of original to said ADF 30 one after another, and repeats it up to reading of the last sheet of original (Fig. 11, repetition of steps S34: N, S36, S37, S38) However, only at the time of copying of the original fed in the last place by the ADF 30, the pattern synthesizing circuit 103 reads the image stored in said bit map memory i.e. the documentary ID mark and combines it into an image (Fig. 11, step S34: Y, step S35).

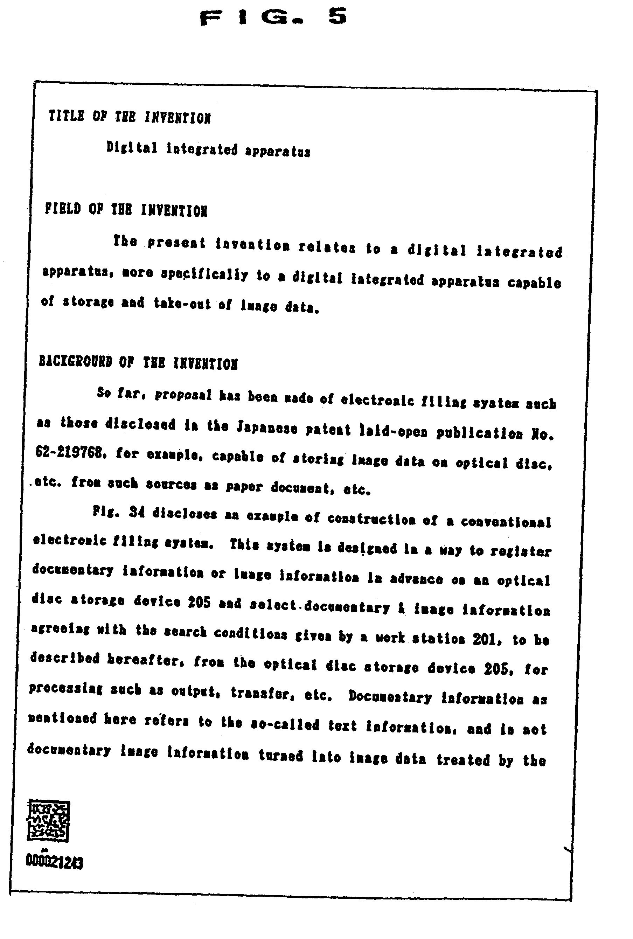

As a result, a documentary image having a document ID mark corresponding to document ID on the first page (cover) of the copied document image, as shown in Fig. 5, is output from the laser printer unit B (step S36). Moreover, the documentary image data corresponding to the original placed on said ADF 30 is stored on the HDD 97 as documentary image file of TIFF (Tagged Image File Format) form with multiple pages, for example. As file name at that time, said document ID can be used for example, and the file name of the documentary image file is given as 00000001.tif in the case where said document ID is 00000001. A document given a document ID mark as above will hereinafter be referred to as cover original.

If copying is executed as above, an attribute data including said document ID, necessary for controlling the document concerned, is generated and this attribute data is registered in the attribute management table of the HDD 97. This attribute management table will be described later.

While the above explanation was given on a case where the document is fed by ADF30 from the last page, it is also all right as a matter of course to have a construction for feeding from the first page (page 1). In any case, the document ID mark is put on the first page.

While the Fig. 11 shows a process in which document ID mark is generated after the first page of the document is read, it is all right to generate document ID mark before the first page of the document is read. In other words, Step 30 in Fig. 11 can be switched with Step 31.

### [Copying of 2nd part and after]

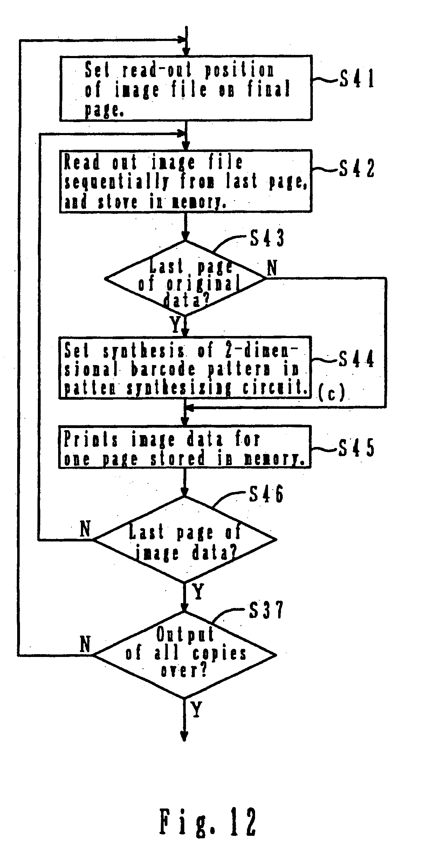

In the case where copying of a plural number of pages is instructed by the control panel 92, in said copying, copying of the 2nd page and after is processed as in the flow chart indicated in Fig. 12 in addition to said processing. While the output of said input image processing circuit 74 is directly output from the laser printer B through the multiplexer 76 in the copying of the 1st part, the documentary image data stored in the HDD 97 is output on the laser printer from the 2nd part and after.

Upon completion of the printing of the last page of the first part (last page as order, but actually the 1st page) (namely, upon detection of the absence of any original remaining on the ADF 30), said image reading means 13 notifies to that effect to the registration & transfer means 20. At this notification, the registration & transfer means 20 reads out the documentary image data one after another from the final page of the documentary image data stored in the HDD 97 as above, and stores it in the memory 79 (steps S41 to S42). Next, in the expansion circuit 81, the compressed image data for one page stored in the memory 79 is decoded in real time synchronizing with the printing in the laser printer unit. The binary image signal D6 is selected in the multiplexer, to perform printing, by output means 9, of the documentary image data stored in the memory 79 (step S45). Here, said printing and the processing for reading the documentary image data of the next page from HDD 97 and writing it in the memory 79 can be performed in parallel.

The processing described above is repeated for the required number of times up to the last page (steps S46: N to S42), and also repeated for the required number of copies (steps S47: N to S41).

However, only when printing the last page of each part (1st page), the pattern synthesizing circuit 103 reads the document ID mark stored in said bit map memory and combines it with the image read out from the HDD 79 (steps S43 to S44). As a result, a document ID mark corresponding to the document ID is added to the first page (cover) of each part of the copied document.

With the processing described above, the user can copy the image of the original and automatically file it without making any special operation for filing. The take-out procedure of the filed documentary image data will be described later.

### [Transmission by facsimile]

Next, explanation will be given hereafter on a case where storage of documentary image data is made together with transmission by facsimile on said digital integrated apparatus, based on drawings.

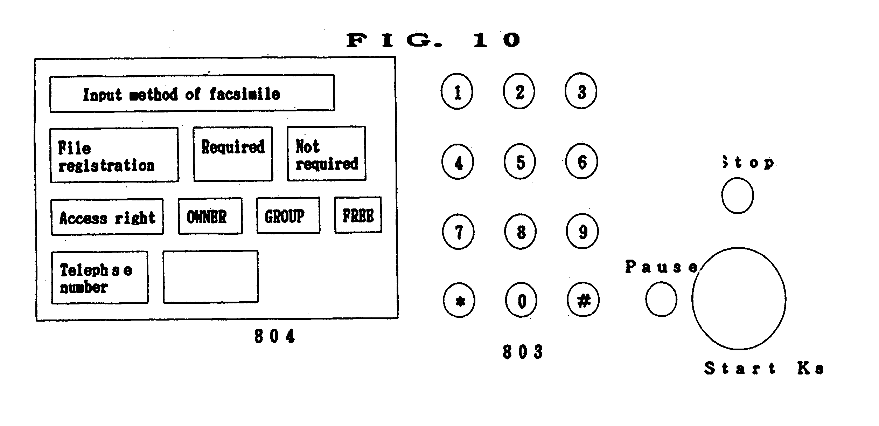

The user performs user authentication in the same way as in said case of copying. When this user authentication is made, the mode selecting picture indicated in Fig. 8 appears on the control panel 92. Here, the user selects "FAX TRANSMISSION" mode on the control panel 92, places the original to be transmitted by facsimile on the ADF 30, and, after setting section of necessity or not of "registration in file," "access right" to documentary image file and "telephone number" from the picture diclosed in Fig. 10, presses the start key Ks.

Said ADF 30 feeds the original placed on it one by one onto the original stand 31 from the last page and the processing steps thereafter such as generation of said document ID, reading of original, storage of documentary image data in said memory 79, storage in said HDD 97, etc. are made in the same way as in said case of copying.

However, no printing is made except for the original fed in the last place (1st page of original), and only this 1st page of original is combined with the document ID mark in which said document ID is encoded. Namely, this processing is about equal to that indicated in Fig. 11, but the printing (Fig. 11, step S36) is made only for the final page. Namely, the arrow mark in solid line (a) in Fig. 11 turns into an arrow mark in broken line (b) in the case of transmission by facsimile.

Next, documentary image data is read out page by page from the documentary image data stored in the HDD 97, and is stored in the memory 79, and this documentary image data is transmitted by facsimile by using CCU 93. The fax transmission of documentary image data stored in the memory 79 and the storage, in said memory 79, of the documentary image data for the next page from said documentary image file can be performed in parallel. Those processing steps are repeated up to fax transmission of the documentary image data of the last page.

On said filed documentary image data, said attribute information is formed by said document management means 3 and registered in the attribute management table T10 of the HDD 97, in the same way as in said case of copying. Here, "FAXSEND" showing transmission by facsimile is registered in the Registration method" column in said attribute management table T10, while "0" corresponding to HDD 97 is registered in said "MEDIA ID".

Said printing of the 1st page may be made by using either the multivalued image data D4 obtained from the input image processing circuit 74 as indicated above or the image data once stored in the HDD 97 by said processing. When using the image data once stored in the HDD 97, only the final page (1st page) is printed, after completion of readout of all pages, by putting document ID mark before fax transmission, or after the end of fax transmission.

This makes it possible for the user to automatically store the original for fax transmission in the document storing area 7 of the HDD 97 together with transmission by facsimile, without making any special operation. Moreover, he can also obtain cover original with document ID mark for taking out stored documentary image data.

### [Reception by facsimile]

Next, explanation will be given hereafter on a case where filing of documentary image data is made together with reception by facsimile on said digital integrated apparatus, based on drawings.

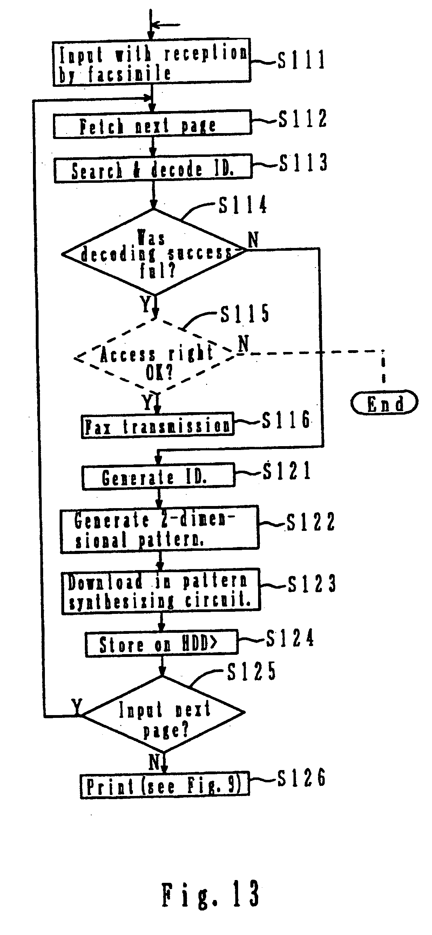

The lower half (step S121 and after) of Fig. 13 is a flow chart showing the procedure of reception by facsimile. However, as this procedure is partly common to FAX transmission procedure based on request from a facsimile in distant place to be explained later, both of those procedures are expressed in a single flow chart.

The documentary image data received by facsimile, through a public line 95, with the FAX modem constituting the facsimile receiving means 14 is once stored page by page in said memory 79. Here, search and decoding of document ID are made (step S114), but it was presumed that no decoding could be made here because ordinary documents received by FAX are not accompanied with document ID.

Next, said document ID is generated by the document management means 3 in the same way as in said copying, (2-dimensional document ID mark is generated) by the document ID encoding means 5, and the document ID mark is downloaded in the pattern synthesizing circuit 103 by the pattern synthesizing unit 103a (steps S121 to S122 to S123). At the same time, said registration & transfer means 20 stores the documentary image data for each page stored in the memory 79, in the document storing area 7 of the HDD 97 through the IDE controller 96 (step S124). Next, said registration & transfer means 20 executes storage of the documentary image data on 2nd page and after on the HDD 97 one after another (step S125: Y to 112: N to step S124). Said storage of documentary image data on one page on said HDD 97 and the storage, in memory 79, of documentary image data on the next page can be performed in parallel.

Next, after completion of the communication for FAX reception, the documentary image data thus stored is printed on paper (step S126).

The procedure of this printing is about identical to the copying procedure indicated in Fig. 12 and, therefore, no detailed explanation about it will be given here. No checking of the number of copies is required because only one copy is printed here (Fig. 12, step S47).

In the documentary image file prepared at the stage of FAX reception, said attribute information is stored in the attribute management table T10 by said document management means 3, in the same way as in said case of copying. Here, "FAX RECEIVED" showing reception by facsimile is registered in said "Registration method" column in said attribute management table T10, "0" corresponding to HDD 97 is registered in said "MEDIA ID", while "0" meaning absence of any specified user is set in "USER ID". Moreover, said "ACCESS RIGHT" is set automatically for the access right set in advance depending on the form of use, such as GROUP, etc. for example.

This makes it possible for the user to automatically store the image received by fax together with reception by facsimile, without making any special operation for filing. Moreover, he can also obtain document with ID mark simultaneously as this filing.

### [Remote printing]

Next, explanation will be given hereafter on a case where filing of documentary image data is made together with remote printing for printing documentary image data transmitted from a personal computer, etc. (not illustrated) connected to the LAN 102.

The personal computer connected to the LAN 102 transmits user ID, password and access right information to the digital integrated apparatus, prior to transfer of documentary image data. The digital integrated apparatus performs user authentication based on the user ID and password received, through the LAN 102, from the LAN controller 101 constituting the printed image receiving means 15. After execution of this user authentication, the user gives instructions for printing, and the documentary image data is transferred from said personal computer. The processing steps thereafter are the same as in said case of reception by facsimile.

In the filed documentary image data, said attribute information is stored in the attribute management table T10 of the HDD 97 by said document management means 3, in the same way as in said case of reception by facsimile. Here, "PRINT" showing remote printing is registered in said "Registration method" in said attribute management table T10, "0" corresponding to HDD 97 is registered in said "MEDIA ID", while the ID of the user who operated said personal computer is set in "USER ID". However, the setting of access right can be set by the personal computer before the transmission of document, unlike in the case of reception by facsimile.

As described above, the user of the personal computer which issued a request for remote printing can not only automatically file the printed image together with remote printing but also obtain document with document ID mark, without making any particular operation for filing the printed image.

### [Attribute control table]

The attribute data such as document ID, etc. generated in the course of document storing as described above is registered in the attribute management table T10 assigned to the attribute area 6 on the HDD 97. Here, the matters to be registered are, as shown in Fig. 7, such information as "document ID" of documentary image data, "number of pages", "image size", "method of registration", "date & time of registration", "user ID", "access right", "media ID", etc.

Said "image size" of this attribute data indicates the size corresponding to the fixed form of documentary image data at the time of filing (A3, A4, etc., for example), said "method of registration" indicates the input mode (copy = COPY, transmission by facsimile = FAXSEND, reception by facsimile = FAXRECEIVE, printing function of personal computer = PRINT) in which the documentary image file was generated, while said "user ID" indicates the user ID of the user who registered that file.

Said "media ID" is an identifier for identifying the medium in which the documentary image file is stored, and the media ID of said HDD 97 is "0", while the media ID of the magneto-optic disc 100 to be explained later is "1". The processing for moving a documentary image file from the HDD 97 to the magneto-optic disc 100, and the furnishing of media ID to the magneto-optic disc 100 will be explained later.

As described later, when a original with document ID mark is registered again at the stage when a new documentary ID mark is generated, and encoded in the document ID mark and combined on the cover original. Said "destination of link" and "origin of link" columns indicate the relation between the document ID identifying said new document and the document ID identifying the original document. Fig. 7 indicates that the documentary image data of the document ID 00000005 is a data produced by reregistration (refiling) of the documentary image data of the document ID 00000004, and "COPY" showing copying is registered in "method of registration" while "0" corresponding to HDD 97 is registered in "media ID".

### [Designation of document]

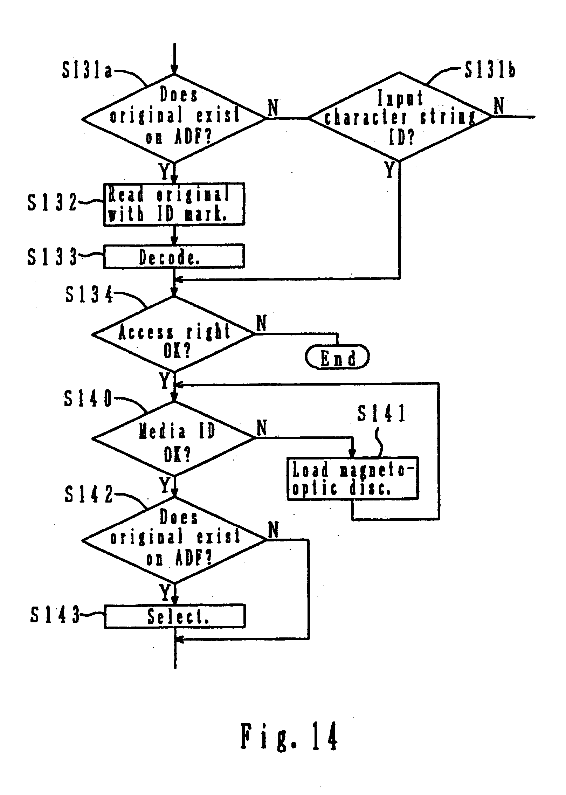

It becomes necessary to designate specific documentary image data before taking out (printing) some documentary image data stored in the HDD 97, transmitting by facsimile or editing (deletion, combination) some designated documentary image data as described above. Fig. 14 is a flow chart showing the procedure for designating documentary image data in such a case.

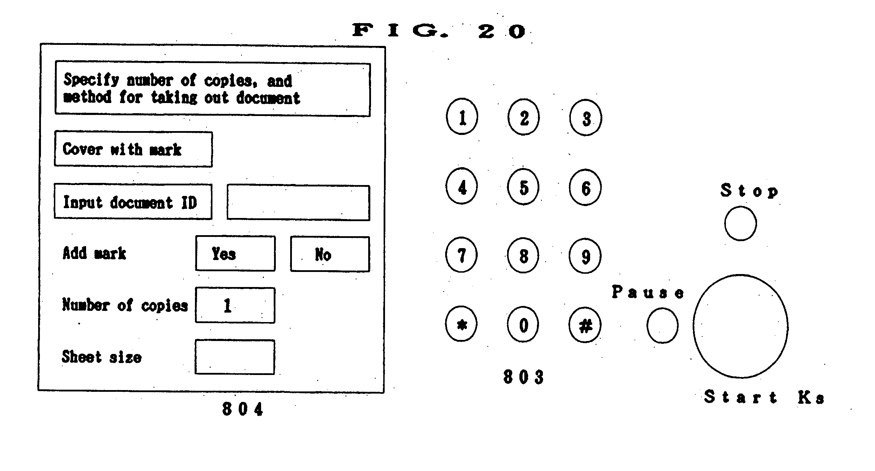

As method for designating documentary image data, there are such methods as a method of reading said combined document ID mark and a method of directly inputting the document ID in a sequence of characters (or a sequence of numbers) (Fig. 14, steps S131a, S131b). In either case, a question is posed to the user about whether read the cover original with document ID mark at the outset of the respective processing modes or input the document ID of a sequence of characters, as indicated in Fig. 20 (indication of control panel for taking out document (see first and second columns of Fig. 20)). And at the outset of the respective processing modes the user instructs his selection of either case through the control panel 92. In case a method of inputting the document ID in a sequence of charcters is designated, a document ID mark is inputted in the frame. Moreover, the user also inputs necessary matters corresponding to the respective processing modes and presses the start key Ks, the process of which is not illustrated in Fig. 20.

In the case of reading of the cover with document ID mark, the cover original with document ID mark placed on the ADF 30 is read by the image reading means 13 and this image data is once stored in the memory 79 (Fig. 14, step S132). The reading of the portion of document ID mark at that time will be explained in detail later. Moreover, the image data read by the image reading means 13 is stored in the memory 79 without being compressed by the compression circuit 77 in this case.

The document decoding means 5 obtains a document ID by decoding the document ID mark stored in the memory 79 as described above (Fig. 14, step S133). Furthermore, based on the document ID thus obtained, the document management means 3 refers to the attribute management table T10 to check whether or not access to the documentary image data corresponding to the document ID concerned has been gained by a user having an access right. Namely, the input user ID must agree with the user ID on the attribute management table T10 in the case of "OWNER", the input user ID must be of the same group as the user on the attribute management table T10 in the case of "GROUP", while the use is allowed to anybody in the case of "FREE" (Fig. 14, step S134).

As explained hereafter, after being stored in the HDD 97, documentary image data can be moved to removable media such as magneto-optic disc 100, etc. and, for that reason, judgement is made, after a documentary image data has been identified by document ID as described above, whether this documentary image data is stored in the HDD 97 or stored in the magneto-optic disc 100 (Fig. 14, step S140).

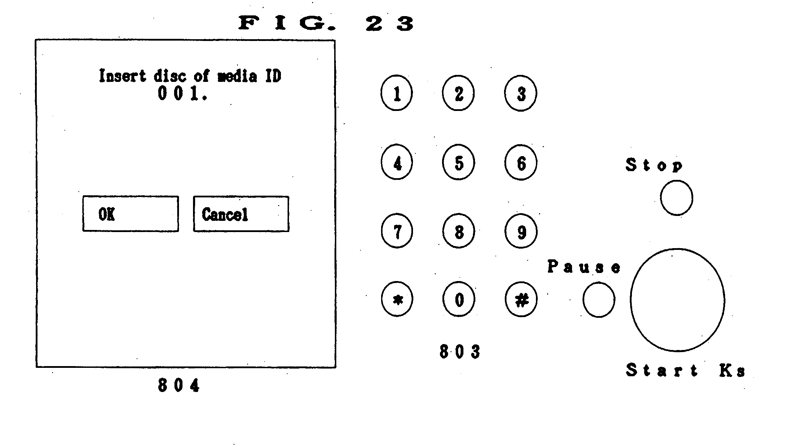

In the case where the documentary image data is stored in the magneto-optic disc 100, judgement is further made if a correct magneto-optic disc 100 having the disc ID which stores the document in object is loaded in the disc drive or not and, in case no correct magneto-optic disc 100 is loaded, a warning message as indicated in Fig. 23 is issued to urge loading of a correct magneto-optic disc 100 to the user. At this message, the user loads an designated magneto-optic disc (Fig. 14, step S141).

Moreover, as explained later, there are cases where a specific documentary image data is related in contents to other specific documentary image data. In such a case, link information is registered in the attribute management table T10 as described earlier. Then the documentary image data corresponding to the document ID concerned and the documentary image data linked to it are displayed on the control panel 92 for the user to select at the point in time when the document management means 3 obtained the document ID of a specific documentary image data or at the point in time when it identified the storing medium as mentioned above (Fig. 14, steps S142 to S143).

If the user selects a documentary image data as an object here, the selected documentary image data becomes the documentary image data to be processed thereafter. Moreover, in the case of absence of link information, the documentary image data identified with the first document ID becomes the documentary image data to be processed thereafter (Fig. 14, step S142: N).

### [Taking out documentary image data from HDD]

Next, explanation will be given hereafter on the case of taking out documentary image data stored in the HDD 97 as above, based on drawings.

The user performs user authentication in the same way as in the respective embodiments described above. When this user authentication is made, the mode selecting picture indicated in Fig. 8 appears on the control panel 92. Here, the user calls the document take-out picture as shown in Fig. 20 by selecting the "take out document" mode on the control panel 92, and specifies the method of input of document ID (input document ID based on document ID mark or input document ID in a sequence of characters), synthesis or not of document ID mark on the document taken out and the number of prints. Then the user presses the start key Ks. With this operation, the number of copies is set in the output means 9. Furthermore, this document ID is notified to the document management means 3 in the case where the document ID was input in a sequence of characters, but the image reading means 13 starts working to read said cover original and determines the document ID by the above-described procedure in the case of use of cover original furnished with document ID mark. (In addition, medium check and check of link information are made as required.)

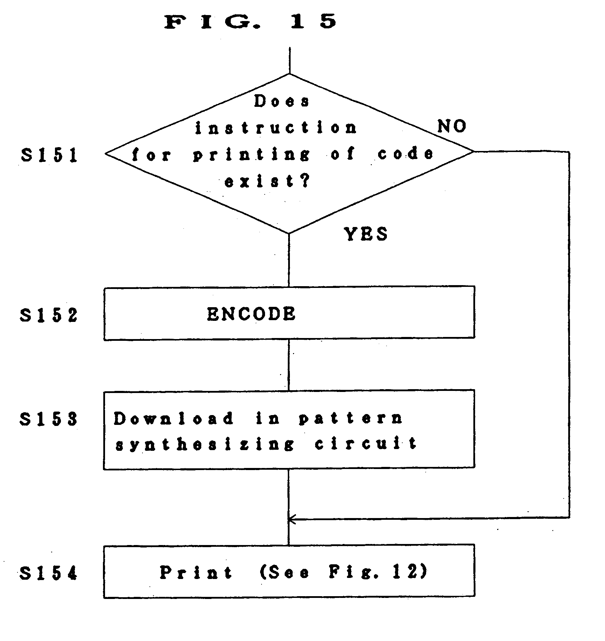

If the documentary image data is designated as above, the process moves to that of printing indicated in Fig. 15.

Namely, in the case where no instruction for combining of document ID mark is given on the output document, the processing moves to printing by skipping the subsequent steps of encoding and setting of document ID mark (Fig. 15, step S151: N to S160). In the case where combining of document ID mark is instructed, the document ID obtained as described above is input in the document ID encoding means 4 through the document management means 3 before the target document is read out, and is encoded in the document ID mark here (Fig. 15, steps S151: Y to S152). This document ID mark is downloaded in the pattern synthesizing means 8 (Fig. 15, step S153).

Thereafter, as shown in step S154 in Fig. 15, printing is executed by the same procedure as that of printing explained in Fig. 12 (printing of 2nd part and after in the copying).

When the page forming the subject of printing is the last page, the document ID mark and the target documentary image data are combined to be printed. In the case where no instruction is given in the output document about printing of document ID mark, the document ID mark is not printed even if the user executes synthesis of pattern (Fig. 12, step S44), because no setting of document ID mark is made in the pattern synthesizing circuit 103.

Here, naturally, said multiplexer 76 selects the binary image signal D6, and outputs in real time the image data for one page which is input through the expansion circuit 81 and stored in the memory 79. Moreover, the output of the image data for one page stored in the memory 79 and the writing from HDD 79 to memory 79 can be performed in parallel.

As explained above, in the case where there still exists, after the end of take-out of one documentary image data made as above, some original with document ID mark on said ADF 30, the next original is fed onto the original stand 31 by said ADF 30. The processing steps thereafter are the same as those for above.

In this way, by reading said original with document ID mark by means of said image scanner unit A, it becomes possible to take out (print) all pages of stored documentary image data easily. Even in the case where there are a plural number of documentary image data to be taken out, such plural number of data can be taken out at a time by placing a plural number of originals with document ID mark on said ADF 30.

### [Fax transmission of filed documentary image data]

Next, explanation will be given hereafter on the case where documentary image data filed in said HDD 97 are transmitted by facsimile, based on drawings. The user performs user authentication in the same way as in said case of copying. When this user authentication is made, the mode selecting picture indicated in Fig. 8 appears on the control panel 92. Here, the user selects the "FAX stored document" mode on the control panel 92, and specifies the FAX number of the destination of transmission and the method of input of document ID.

In this case also, explanation will be omitted about the specification of document, because said procedure of document specification can be used as it is. Moreover, the transmission by facsimile of documentary image data after the checking of said access right (medium check and check of link information are made further as required.) will not be explained in detail here, because this processing consists in simply transmitting the documentary image data by facsimile as they are read out page by page from the memory 79.

As described above, by either reading said cover original with document ID mark by means of said scanner unit A or specifying it directly by key operation, it becomes possible to transmit stored documentary image data by facsimile easily. Furthermore, even in the case where there are a plural number of documentary image data to be transmitted by facsimile, such plural number of data can be transmitted by facsimile at a time by placing a plural number of originals with document ID mark on said ADF 30.

### [Moving/copying file to removable media]

Next, explanation will be given hereafter on the case of moving or copying documentary image data stored in said HDD 97 to removable media such as magneto-optic disc 100, etc. for example, based on drawings.

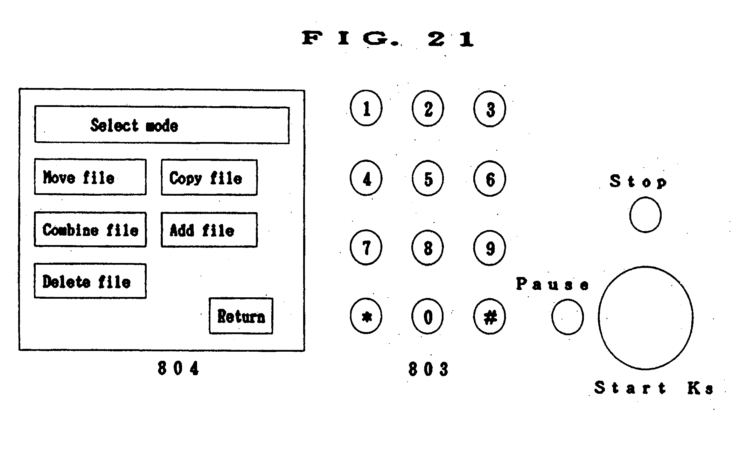

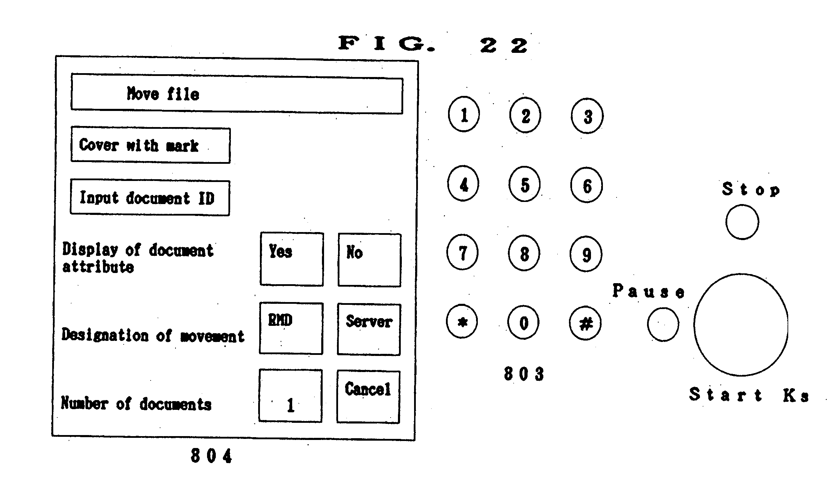

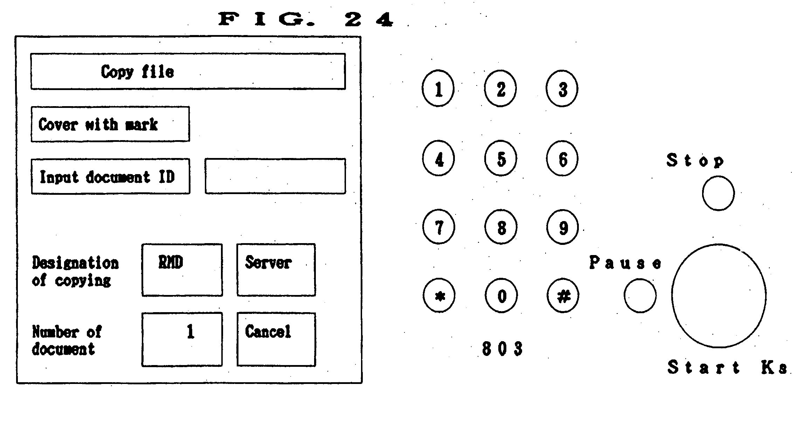

The user performs user authentication in the same way as in said case of copying. When this user authentication is made, the mode selecting picture indicated in Fig. 8 appears on the control panel 92. Here, the user calls the stored document processing selecting picture as shown in Fig. 21 by selecting the "process stored document" mode on the control panel 92, and selects either "move file" or "copy file". Next, the instruction picture for "moving file" indicated in Fig. 22 is displayed in the case where "move file" is selected but the instruction picture for "copying file" indicated in Fig. 24 is displayed in the case where "copy file" is selected respectively. In this instruction picture for "moving file" or instruction picture for "copying file", the user selects the method of specification of document to be processed, and the destination of moving or copying. Here, a removable medium (RMD) is specified as destination of moving or copying.

The method of input of document ID is identical to said method of take-out of documentary image data from HDD, and the user either inputs the document ID in a sequence of numbers or places the cover original with document ID mark on the ADF 30 and then presses the start key Ks.

When a specific document ID is obtained with such operation, the documentary image data identified by this document ID is read out by the registration & transfer means 20 from the document storing area 7 of the HDD 97, and moved to the magneto-optic disc 100. Here again, checking is made about the access right in the same way as in said take-out of documentary image data from HDD 97.

In the movement of file, the registration & transfer means 20 moves said documentary image data to the magneto-optic disc 100 only in the case where the user ID determined at the time of user authentication agrees with the "user ID" in said attribute information in the documentary image file to be processed. Namely, consideration is given to the fact that the original documentary image data does not remain in the HDD 97 any longer after the moving. On the other hand, at the time of copying of file, said registration & transfer means 20 moves said documentary image data to the magneto-optic disc 100 in the case where access is allowed to the user ID determined at the time of user authentication.

Next, when moving file, said document management means 3 gains access to said HDD 97 based on the document ID in the documentary image data to be submitted to said processing, reads out attribute information from said attribute management table T10, and stores the attribute information in the magneto-optic disc 100.

In said magneto-optic disc 100, media ID is stored in advance as file (hereinafter referred to as "media ID file"), and said document management means 3 reads out this media ID from said magneto-optic disc 100, and writes said media ID in the "media ID" field of said attribute management table T10. The example of contents of said attribute management table T10 given in Fig. 7 indicates that the documentary image data of document ID = 00000004 was moved to the magneto-optic disc 100 of media ID = 0001.

In the case where said media ID file does not exist in said magneto-optic disc 100, said document management means 3 prepares a media ID file having a new media ID as content, in that magneto-optic disc 100. Here, said document management means 3 controls used media ID by user ID, and generates new media ID by increment of media ID previously generated in the last place.

By performing such processing, it becomes possible to make movement & copying easily from HDD 97 to magneto-optic disc, which is a removable medium, and also make movement & copying of a plural number of documentary image data at a time by having images with document ID mark read by the scanner unit. In addition, control of documentary image file moved to a removable medium is also possible.

### [Taking out file document from removable medium]

Next, explanation will be given hereafter on the case of take-out (printing) of documentary image data file from removable media such as said magneto-optic disc 100, etc., based on drawings.

The user performs user authentication in the same way as in said case of copying. When this user authentication is made, the mode selecting picture indicated in Fig. 8 appears on the control panel 92. Here, the user selects the "take out document" mode on the control panel 92, And then the take-out picture as shown in Fig. 20 is displayed. The user then specifies the method of take-out of document, and synthesis or not of document ID mark on the document taken out, and the number of prints, and inserts the magneto-optic disc 100 in the magneto-optic disc drive 99.

Also in this case, there is a case where document ID mark is used and a case where document ID in a sequence of numbers is used, but detailed explanation on this operation will be omitted here because in either case the operating steps are the same as those explained in said Fig. 14.

The point at which this procedure is different from that of take-out of document from HDD 97 is that, after verification of the access right, it requires the steps of checking the media ID and loading a correct magneto-optic disc in the magneto-optic disc drive 99.

In the case where, after thus verifying agreement of media ID, the user prefers a document with document ID mark, as shown in Fig. 15, the user downloads the corresponding document ID mark in the image synthesizing circuit 103, and then passes to the printing. This printing is the same as that indicated in Fig. 12 (printing from 2nd part and after from HDD 97) and, therefore, the explanation on it will be omitted here.

As described above, according to the present invention, documentary image data stored in removable media (magneto-optic disc 100) can be taken out easily. Moreover, even in case it became unclear in which magneto-optic disc the documentary image data is stored, it is possible to identify the media ID of that removable media and notify it to the user, thus improving operability.

### [Copying original with document ID mark]

Next, in the digital integrated apparatus according to the present invention, there are cases where a original already furnished with a document ID mark is registered (or copied and registered at a time). For example, there is a case where the user once registers a certain document in the HDD 97 and, after obtaining a original with a document ID mark, adds corrections to that original and then registers it again. In that case, if some relation is established between the document registered first and the document registered later for the sake of control, the user can output the object document (including transmission by facsimile) while checking that correlation between the two (or a plural number of) documents.

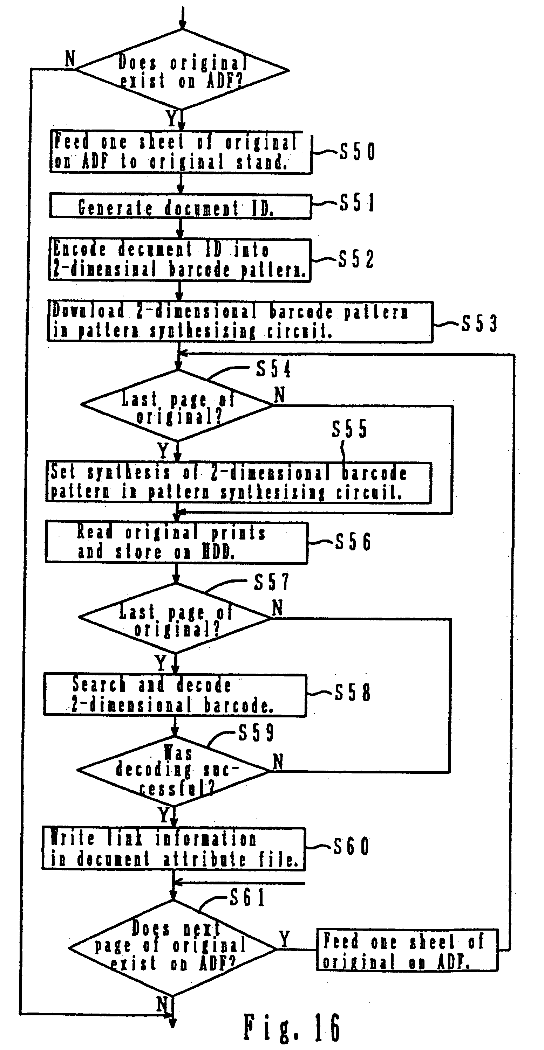

Fig. 16 is a flow chart for copying in the case of copying of one copy. Moreover, afore-mentioned Fig. 9 will be used as input picture for this case. Explanation will be given hereafter on the flow of image signal in the case of storing the readout original image at the same time as copying in single copy of a original already furnished with a document ID mark, based on drawings.

Detailed explanation will be omitted on the procedures of user authentication, setting of copying conditions & access right, etc. because they are the same as those for normal copying as described before. Although Fig. 9 is used as input picture, the input method of document ID is specified because document with document ID mark (or case where document ID is input in numeric string) is handled in this case, while document without document ID mark is handled in ordinary copying.

Moreover, explanation will be omitted on the generation and printing as well as storing of document ID indicated in Fig. 11 (Fig. 11, steps S29 to S36), because they are the same as those in Fig. 16 (see Fig. 16, steps S49 to S56). Furthermore, explanation will be omitted on the processing in a case where there exists some remaining original on the ADF 30 (Fig. 11, steps S37 to S38), which is identical to the procedure indicated in Fig. 16, steps S57 to S58.

As the ADF 30 feeds the last page and the documentary image data is read, the document ID decoding means 5 searches to check if there exists any ID mark for it and, if such ID mark exists, decodes the ID mark to obtain an ID corresponding to the ID mark and the ID delivers to the document management means 3. At this, the document management means 3 performs the writing described below in the attribute management table T10 indicated in fig. 7. Namely, it writes the newly registered document ID in the "link destination" field corresponding to the document ID currently being read, and writes the document ID of the original document (document currently under reading) in the "link origin field" corresponding to the newly registered document ID (Fig. 16, steps S57 to S60).

In said decoding, in case the document ID mark cannot be decoded (including a case of absence of document ID mark), the steps to be taken will be the same as those in ordinary copying explained above. Therefore, while ordinary copying is indicated independently in Fig. 11 for the sake of convenience of explanation, both ordinary copying and the copying of original with document ID mark will be processed by the procedure indicated in Fig. 16, as more general practice.

In the example of contents of the document attribute table T10 in Fig. 7, "link origin" information is added to the document registered again with copying (ID = 00000005) from the document with printed document ID = 00000004 as original, and "link destination" information is added to the document with document ID = 00000004.

Copying of single copy of original is completed with the above processing. Explanation on the case of copying of a plural number of copies will be omitted because it is the same as that for 2nd part and after in the afore-mentioned "copying" (see Fig. 12). Moreover, also in the case where a previously stored document (document having document ID mark) is transmitted by facsimile, the document ID of the document to be newly filed is written in the "link destination" attribute of the original document file, and the document ID of the previously filed document is written in the "link origin" attribute of the document file to be newly filed.

Thanks to such construction, the digital integrated apparatus according to the present invention makes it possible, when adding hand-written memo or comment, etc. to previously filed document original and filing that document again, to store the document with that revision history as attribute information of the document, thus enabling version control of the filed documents.

### [Taking out document with link information]

Documentary image data having link information registered as above can be utilized as follows:

As explained in Fig. 14, document ID mark is input from the image reading means 13 or document ID mark is input in a sequence of characters from the control panel 92. This document ID is delivered to the document management means 3, and the document management means 3 gains access to the document attribute table, and extracts the "access right", "link destination" and "link origin" attribute information corresponding to said document ID.

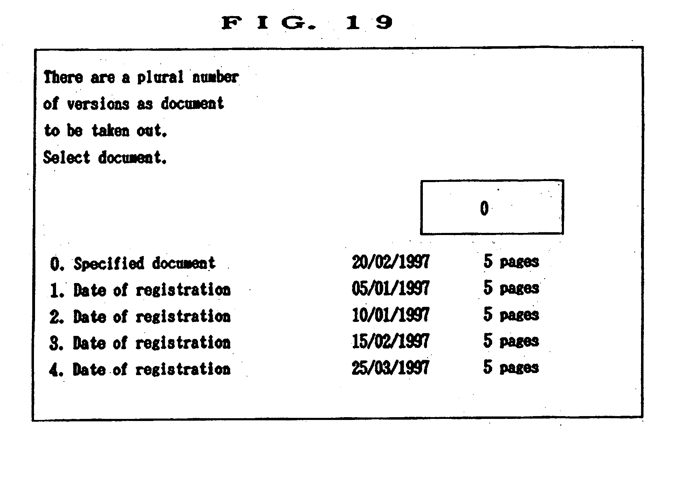

Based on said "link destination" and "link origin" attribute information, the document management means 3 displays, in the case where there exist some documents related to said input document ID and that the user has "access right" to those documents, a list of related documents on the control panel 92 (Fig. 14, step S142: Y). Fig. 19 indicates the state of display of a list of related documents on the control panel 92. The user, if he wishes to take out some related document, inputs the number of that document with ten keys and presses the start key. Moreover, if he wishes to take out the document corresponding to input document ID, the user inputs 0 with ten keys and presses the start key (Fig. 14, S143).

If the document the user wishes to take out is thus identified, the subsequent processing for printing and transmission by facsimile is the same as that explained in Fig. 15 and Fig. 13 and, therefore, explanation on such processing will be omitted here.

As described above, since the link information in the case of reregistration (refiling) of image with document ID mark (previously filed document) is stored in the document attribute table T10, it is possible to take out related document by specifying it with reference to that link information at the time of take-out of document.

### [Combination & deletion of documentary image data]

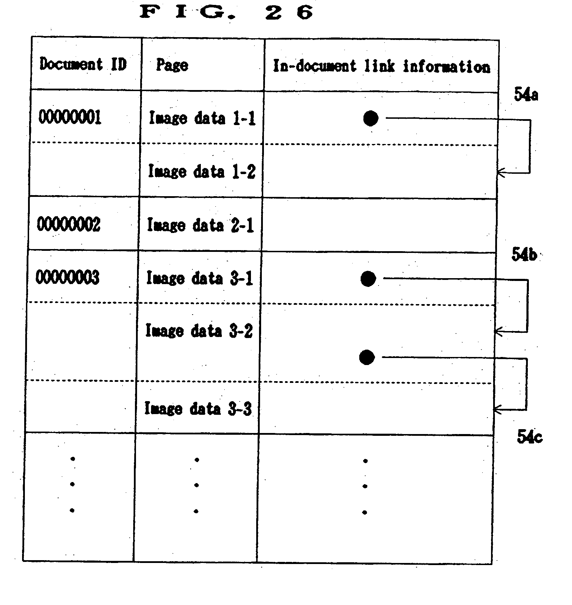

In the first place, to put it in more detail, the document attribute table T10 disclosed in Fig. 7 records the state of linkage among the pages constituting the respective documents. That portion can be indicated by extraction as shown in Fig. 26. Namely, it is provided with in-document link symbol 54a indicating linkage between page 1 and page 2 of the document with document ID 00000001, and in-document link symbols 54b, 54c indicating linkage among page 1, page 2 and page 3 of the document with document ID 00000003, respectively.

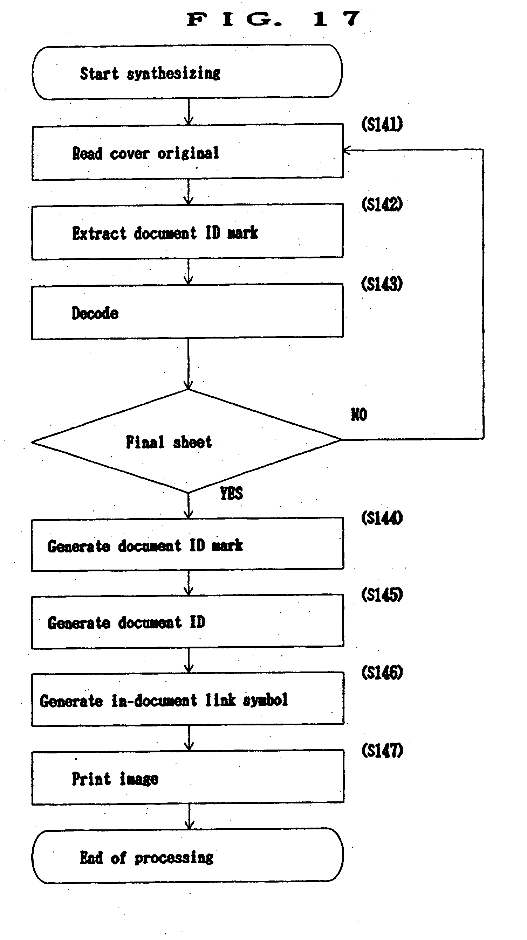

Explanation will be made first on combination of image data made for combining, in this state, 2 image data so that they may be treated as a single image data, based on Fig. 17.

The user first selects "process stored document" from the mode selecting picture, indicates in Fig. 8, on the control panel, and selects "combine files" from the picture of Fig. 21 appearing on the control panel with the above selection. The user thereby specifies processing for combination of image data. After that, the user places the 1st cover original of a previously registered image data and the 2nd cover original on the ADF 30 to have 2-dimensional barcode read and decoded with the document ID decoding means 5 to obtain document IDs. The procedure up to this decoding is the same as that indicated in said Fig. 114 and, therefore, explanation on this procedure will be omitted here (Fig. 17, steps S141 to 143).

When document IDs corresponding to the 2 documents are obtained this way, the document management means 3 generates a new in-document link symbol 54d linking the final pager of the 1st of said 2 documents and the first page of the 2nd document (Fig. 17, step S144). Here, if the document ID of said first document is used as a new ID common to said 2 documents, a document ID mark corresponding to this new document ID is generated by the document ID encoding means 4, and the new document ID mark corresponding to the new document ID is combined to the new document by the pattern synthesizing means 8 for printing the cover original (Fig. 17, steps S145 to S147).

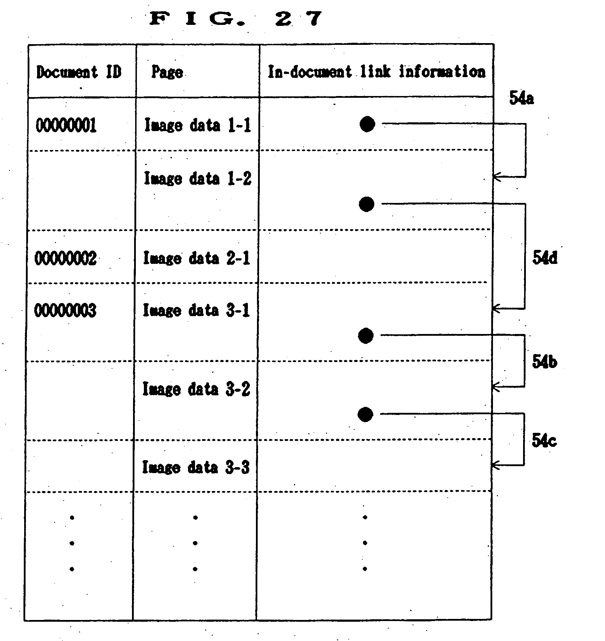

At this time, in Fig. 27, since there still remains the information of document ID 00000003 of the 2nd document stored in the document ID field of the document managemement table T10, reference is made to the image data from page 1 to page 3 of said 2nd document at the time of search with document ID 00000003, in the same way as before the combination. In the case where search is made with document ID 00000001, however, the image data of 5 pages in total i.e. page 1 and page 2 of the 1st document (document ID 00000001) and pages 1 to 3 of the 2nd document (document ID 00000003) are taken out continuously.

With the above processing, combination of image data corresponding to 2 documents is completed. Here, explanation was made on the supposition of combination of image data in 2 documents, but it is also possible to combine image data corresponding to 3 or more documents.

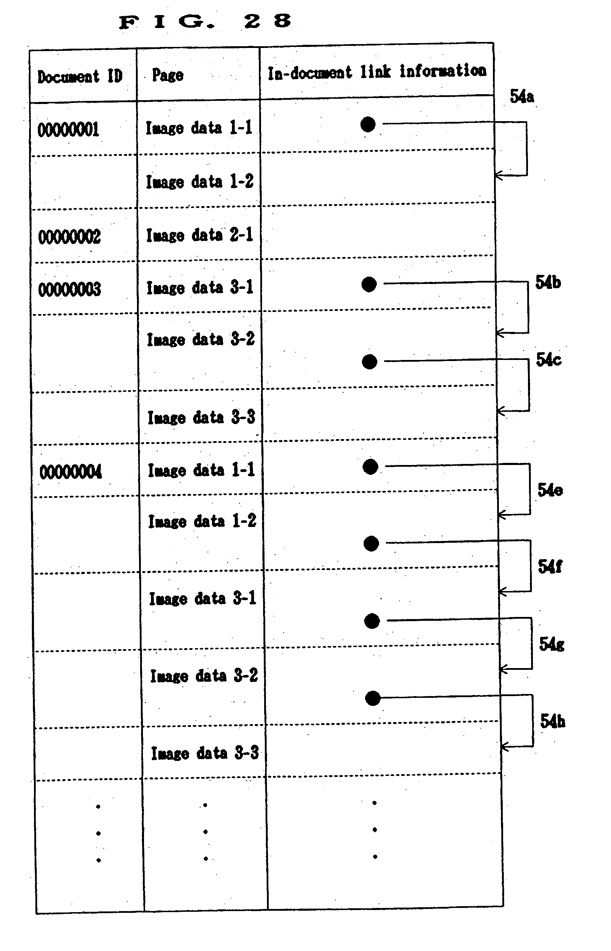

Moreover, as other method for combining image data, there is a method as indicated in Fig. 28.

Namely, the document management means 3 copies specified attribute data of said 2 documents one after another in the open area of the HDD 79 respectively, and obtains a new document ID (document ID 00000004 in this case) common to those 2 documents. At the same time, it generates in-document link symbols 54e to 54h so that the respective pages of said 1st document and the respective pages of said 2nd document may become continuous.

In the above explanation, the method used was a method of having the cover original read by the image reading means 13 to obtain a document ID for specifying a plural number of documents to be combined, but it is also allowable to use a method of directly inputting the document ID from the control panel, in the same way as other processing described above.

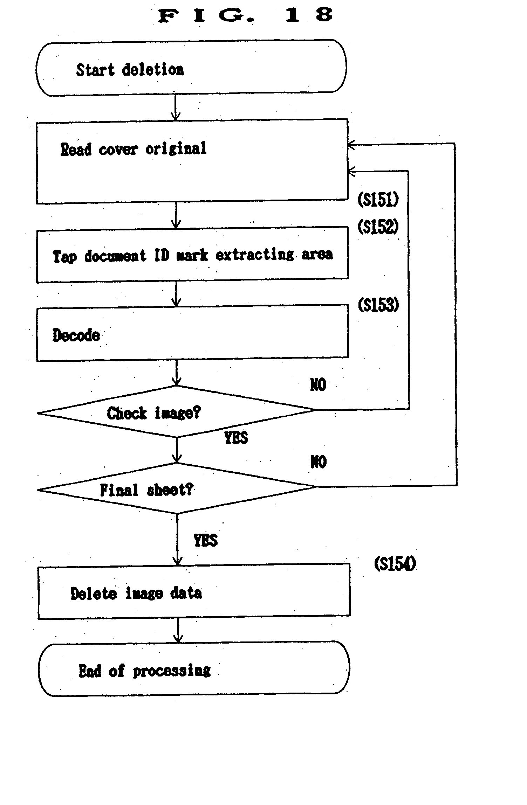

Next, explanation will be given on deletion of image data made by using cover original. Fig. 18 indicates the flow of processing in this case.

The user first selects "process stored document" in the mode selecting picture of Fig. 8 by using the ten keys 803 on the control panel 92, and then selects "delete file" in the picture of Fig. 21. Explanation will be omitted on the procedure up to identification of the documentary image forming the subject of deletion, because it is the same as the procedure in said respective modes. Upon receipt of the document ID, the document management means 3 delivers this document ID to the registration & transfer means 20, and the registration & transfer means 20 reads out the object image data from the documentary image area 7 and displays it in reduced size on the control panel 92. Or, the attribute data of the image data extracted by the document management means 3 is displayed on the control panel 92 (Fig. 18, steps S151 to S153). By checking the drawing thus displayed in reduced size or attribute information, the user presses the OK key (not indicated on the control panel 92 of Fig. 4, etc. but may be substituted with start key Ks, for example), to complete the deletion.

Here, in the case where there are a plural number of image data to be deleted, the above processing steps are repeated the plural number of times.

With the above operations are deleted the image data corresponding to all document IDs, for which checking was made, of the image data forming the subject of deletion.

Here, while the document ID corresponding to the deleted image data is deleted from the attribute table T10, it is so arranged as to prohibit reuse of that same document ID because the cover original has already been printed. Therefore, it is guaranteed that there is only one image data corresponding to one identification code.

### [Taking out by facsimile in remote place]

In the case where it became necessary for the user, at the place of visit in business trip, to see the documentary image stored in the digital integrated apparatus used by himself, the user can obtain the object documentary image data by giving instruction to the digital integrated apparatus used by himself, through a facsimile available at the place of his visit.

At that time, to identify the documentary image data, the document ID mark attached to said cover original is used.

Since the resolution by facsimile is generally low, the document often becomes illegible if the document ID mark attached to the cover original is small. For that reason, the user must furnish the cover original with a large sized document ID mark in advance, when he has the possibility of requesting transmission from a facsimile in a distant place.

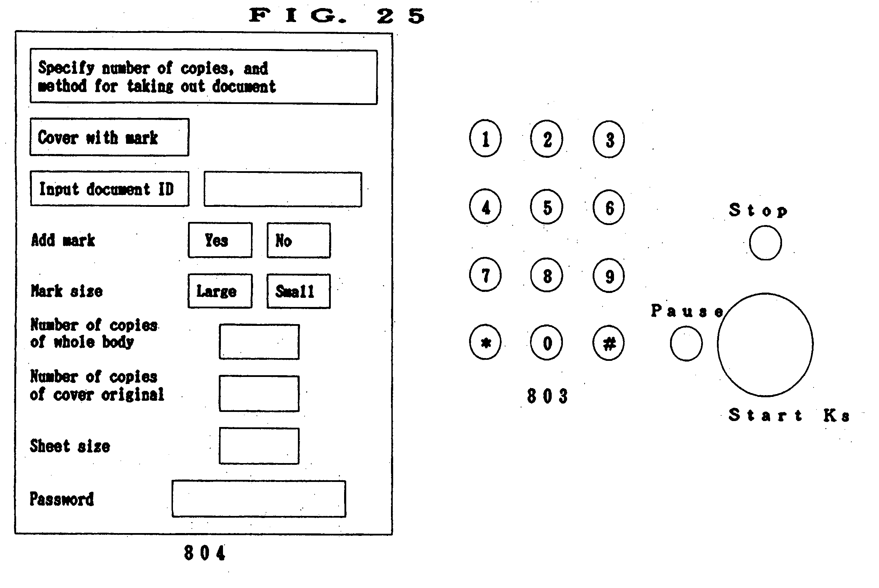

Therefore, prior to departure for business trip, etc., the user selects "take out document" from the mode input picture indicated in said Fig. 8, and then displays the number of copies specifying picture as shown in Fig. 25 (Fig. 20 is a simplified form of Fig. 25 made along the explanation). Here, the user inputs the input method (whether use cover with mark or use document ID in a sequence of charcters or numbers), in the same way as respective examples given above, and selects "yes" in the column for putting mark. When he selected "yes", the user selects "large" in the column for mark size, and inputs the desired number of copies in the column for number of copies of cover original.

Furthermore, when necessary, the user inputs a password, for example, restricting access right to be explained later, and then presses the start key Ks. The procedure of printing after that is exactly the same as that indicated in Fig. 15 (including Fig. 12). However, by prohibiting readout of the documentary image data regarding pages other than the final page, it becomes possible to print the cover original only. In that case, the document ID encoding means 4 generates a large sized document ID mark in the encoding operation (Fig. 15, step S152).

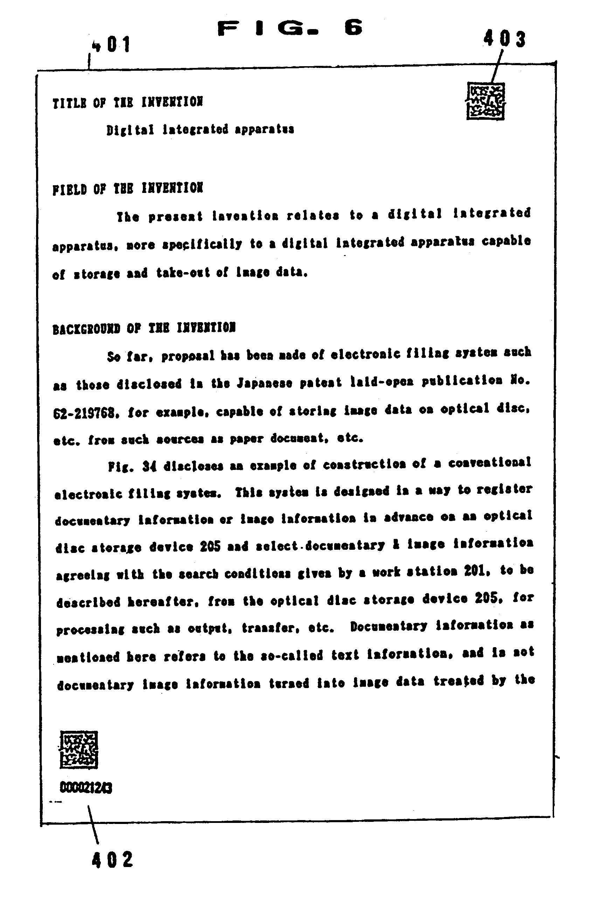

Fig. 6 is an example of cover original furnished with a large sized document ID mark prepared by said procedure, and indicates a cover original having both a small sized document ID mark and a large sized document ID mark in this example, but the cover original may be prepared with a large sized document ID mark only.

Fig. 13 is a flow chart of a case of receiving image data with document ID mark by facsimile and sending back an image data corresponding to that data in return (including procedure of ordinary reception by facsimile). Except for the processing procedure of access right, the identification of document is made in about the same way as the procedure indicated in Fig. 14 (steps S131 to 133), but distinction must be made between ordinary reception by facsimile and the case of return transmission according to this embodiment.

Namely, in ordinary reception by facsimile, no document ID mark is put on the final page and, therefore, it is impossible to make any decoding of document ID (step S114) by said document ID decoding means 5, and the processing passes to that of reception by facsimile. If the decoding is made successfully in said document ID decoding, the registration & transfer means 20 reads out the corresponding documentary image data based on the document ID, and transfers it to the CCU 93 for transmission by facsimile. The judgement of final page or not in Fig. 13 (Fig. 13, S112) is notified by the CCU 93 to the document ID decoding means 5. In the example of Fig. 13, it is so arranged that decoding of document ID is attempted on all pages in anticipation of having document ID mark on any page (Fig. 13, S113).

According to said method, even in the case where a person not having access right obtained said cover original by some means or another and transmitted it from a facsimile in a distant place, he cannot take any specific document freely, because no input of user name, which is to be made at the outset of said copying, etc., is made. Therefore, it becomes possible to restrict access right as described below.

Namely, a password is input in the picture of said Fig. 25. The password input this way is encoded on the document ID mark by the document ID encoding means 4, and is registered on the attribute management table T10 by the document management means 3. This generates a document ID mark including password.

In the case where a cover original furnished with a document ID mark thus generated is transmitted from a facsimile, identification of document is made as explained in said Fig. 13. At this time, collation of password is also made, to allow access only to persons having the cover original furnished with the document ID mark including password (Fig. 13, step S115).

Said cover original with a document ID mark including password is effective, not only for requesting takeout from a facsimile in a distant place as described above, but also for taking out document without user authentication. For example, document can be taken out even in the case where no magnetic card for inputting user ID is available at hand.

While one sheet of original was used in the above example, the number of sheets is not limited to it. For example, in the case where the original is composed of 3 sheets, it is possible to store the 3 sheets as a single file in the storing device and print the first page only as image with document ID mark (set "0" in the column of number of copies in the input picture of Fig. 25, and set the required number of copies in the column of number of copies of cover original). Moreover, it is also all right to reduce the size of images on 3 sheets and combine them into one image and print it as image with document ID mark.

While the image 401 with large sized ID mark is provided with a document ID mark 402 for ordinary take-out of document as shown in Fig. 6 in the form of this embodiment, this mark is not required when simply taking out document through facsimile. Moreover, the document ID mark 402 becomes useless also in the case where the algorithm is prepared in such a way that the large sized document ID mark 3 is decoded by the document ID decoding means 5 with an ordinary take-out of document.

In said form of embodiment, it is possible to control the access right to the image data stored in the image data storing area 7 to grant access such as take-out, etc. of image data to specific users only so as to prevent leakage of image data and that only those who are allowed to have access among the users having images with document ID mark can take out document easily.

Furthermore, also when taking out document by facsimile, only those who are allowed to have access among the users having images with document ID mark can take out document easily.

### [Position of document ID mark]

As explained above, document ID mark is used for specifying object document when performing processing such as take-out of document, etc. Therefore, if the position of the document ID mark on the cover original is known, it improves the reading accuracy and speed of the document ID mark.

Explanation will be given hereafter by taking reading of original in document take-out mode as example.

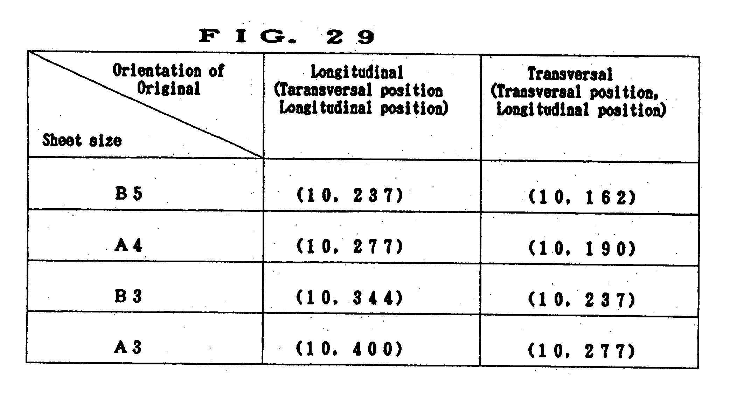

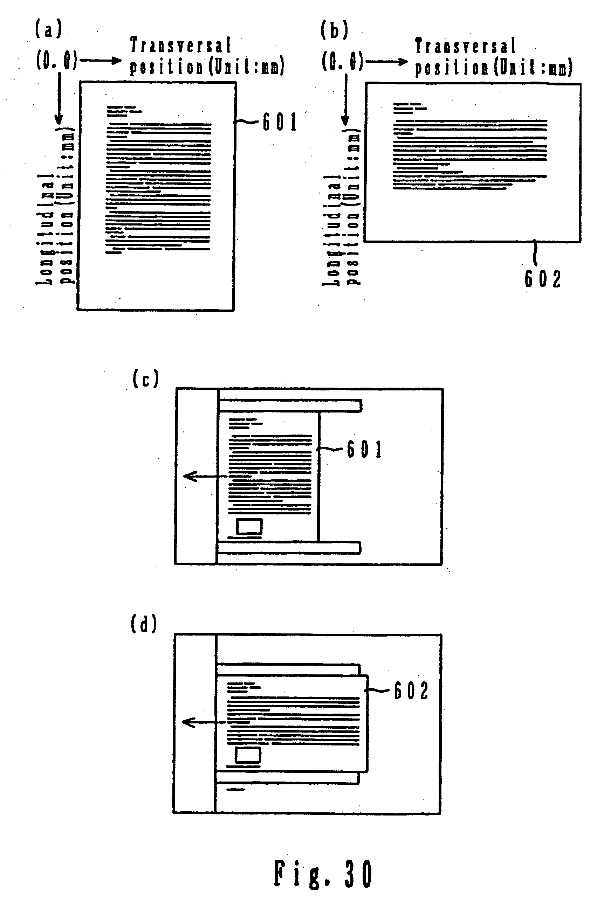

Firstly, on the HDD 97, the relation among printing form size, orientation (portrait or landscape) and document ID mark combining position at the mark position table T20 is registered. The figures in Fig. 29 indicate the position in direction X (transversal) in the first half and the position in direction Y (longitudinal) in the second half with reference to the origin taken at the left top of the form as shown in Fig. 30(a), (b) in units of mm. Fig. 30(a) indicates a portrait original 601, while Fig. 30(b) shows a landscape original 602.

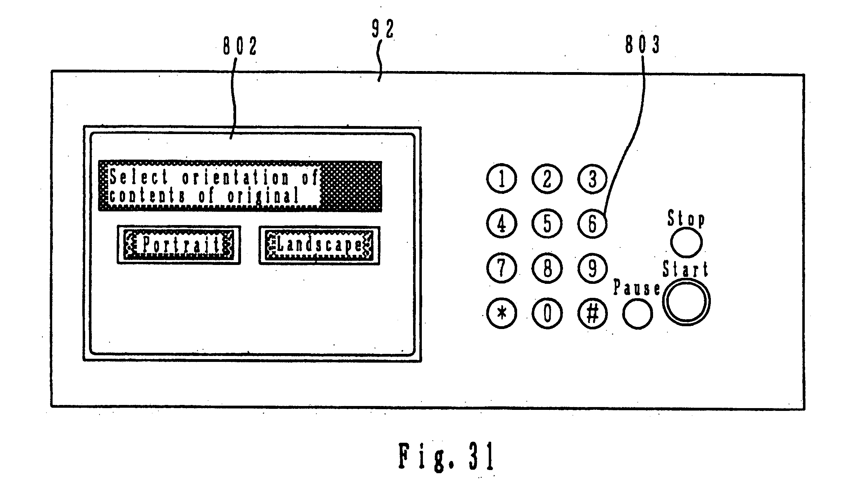

Moreover, when the original document is registered (copying, or simple registration), the direction of original is set for either portrait or landscape from the picture of Fig. 31. Next, as the image reading means 13 works, the original size detecting means 204 is also made to start working at the same time to detect the size of original. As a result, the size of original and the direction of contents of original [portrait or landscape (R in Fig. 7 is put after size in the case of landscape)] is registered on the attribute management table T10 by the document management means 3, as shown in Fig. 30.

In this state, the processing for take-out of document starts as the document ID is input from the cover original with ID mark or directly in a sequence of numbers from the control panel 92 in the document take-out mode (take out entire document or cover original only) and, in addition, the size of printing form is input from the picture of Fig. 20 (or Fig. 25) and the start key Ks is pressed.

At this time, the contents of said mark position table T20 and the form size are set in the document ID encoding means 4, and the form size is also set in the output means 9.

In the encoding for the take-out of document, the document ID encoding means 4 generates document ID mark, and obtains layout position according to form size from the mark position table T20. Next, this document ID encoding means 4 delivers said document ID mark and position information to the pattern synthesizing means 8. As a result, the respective pages of the target document are printed and, at the time of printing of the cover original, the document ID mark is printed at the position set in said mark position table T20 according to the size of the printing form. As a matter of course, it is also possible to output the cover original only by specifying the number of copies of cover original ("0" in the column for number of copies) from the picture of said Fig. 25.

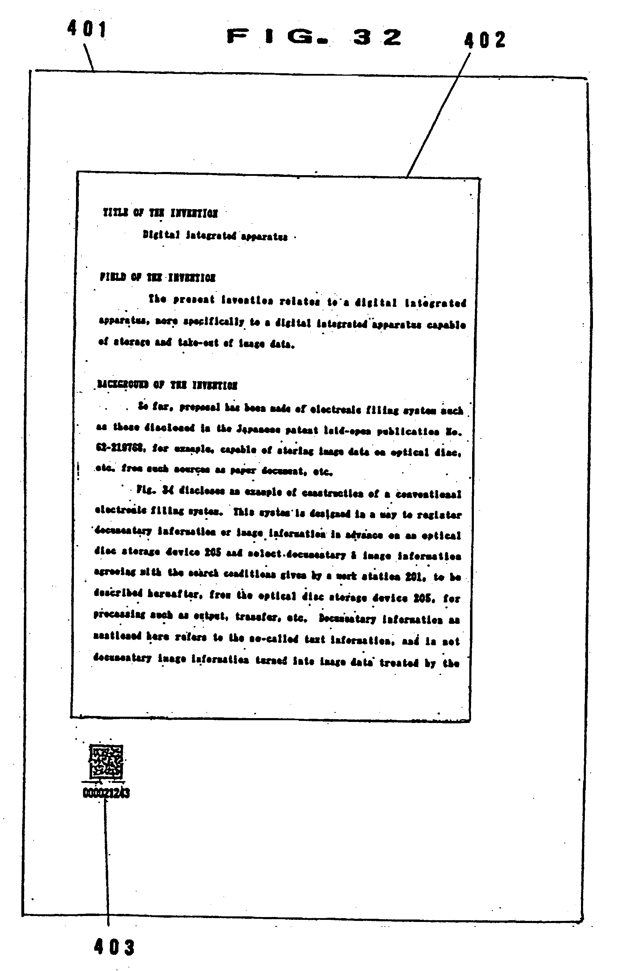

An example of a case where the size of stored image (therefore size of original) is A4 and that the printing form is A4 is as shown in said Fig. 5, and the document ID mark is printed at the position specified in said mark position table T20. Moreover, Fig. 32 indicates an example of printing in the case where the size of the stored image 402 is A4 and that the printing form 401 is B4 and, also in this case, the document ID mark 403 is printed at the position specified in the mark position table T20.

The cover original printed by the above procedure is used for specifying the object document in the processing such as take-out of document, etc., as described above. At this time, since the position of the document ID mark is identified, the image reading means 13 scans by putting a mask on unnecessary parts and skip such masked parts, thus sharply increasing the reading speed and the processing for identification of document.

There may be cases where the original image is registered upside down. In such a case, said document ID mark is positioned at the right top of the printing form. Even in such a case, by setting the order of decoding position by document ID decoding means 5 as left bottom to right top, it becomes possible to determine the document ID at a speed much faster than searching the entire surface of the image to be read.

In the above processing, while the direction of contents of document (portrait, landscape) is supposed to be stored in the image information data held by the attribute management table T10, it is also possible to store it together with the image data stored in the image data storing area 7.

Moreover, while the position of the document ID mark is supposed to be left bottom of the image in the above explanation, it is not restricted to that position. For example, in the case of an image having a margin on the left side as binding allowance, disposing the document ID mark at left top provides an effect of reducing the probability of spoiling the image information.

Furthermore, while in the above explanation the position of the document ID mark identified by the mark position table T20 is univocally determined, it is not restricted to it. For example, depending on the type of original, it is also all right to map a plural number of document ID mark positions when using an image information processing system provided with a function of putting the identification code position to left top or right bottom, etc.

Still more, while in the above explanation the image data was disposed with reference to the left top of the printing form, the reference is not restricted to it, in the case where the image data size is different from the printing form size. For example, the image data may be disposed with reference to the right top or the center of the printing form.

While, in the above example, the direction of document (portrait, landscape) is input from the control panel 92, this input may be omitted by taking the method of input as described below.

Namely, first, the user sets the direction of loading of original on the ADF 30 in a way to be different by 90° from each other between the case of a portrait original and the case of a landscape original as shown in Fig. 30(c), (d). Next, the size in transversal direction and longitudinal direction detected by the original size detecting means 204 at the time of reading of original, is derived and inputted to the document management means 13. The document management means 13 registers the direction of contents of document in the attribute management table T10, based on the size and direction of original detected by the original size detecting means 204.

The above described method makes it possible for the user to preserve the direction of original on the attribute management table T10 by simply changing the way of placing of paper and, therefore, provide an image information processing system having an effect of avoiding the troublesomeness of inputting the direction of original from the control panel 92.

It is also possible to jointly use a method of inputting the direction of of original from the control panel 92 and a method of changing the direction of original placed on the ADF 30 depending on the direction of original as described above. Namely, the user inputs the latter method in the case of a paper size which can be placed on the ADF 30 either longitudinally and transversally as desired, but inputs the direction of original in the case of a large sized paper which can be placed only in one direction either longitudinally or transversally. This makes it possible to provide a digital integrated apparatus of very high convenience for the user, capable of making automatic recognition without any troublesome key operation on the panel in the case of a small original size but enabling the user to input the direction of original accurately by using the operating panel in the case of a large sized original.

### [Setting of type, number of copies of cover original]

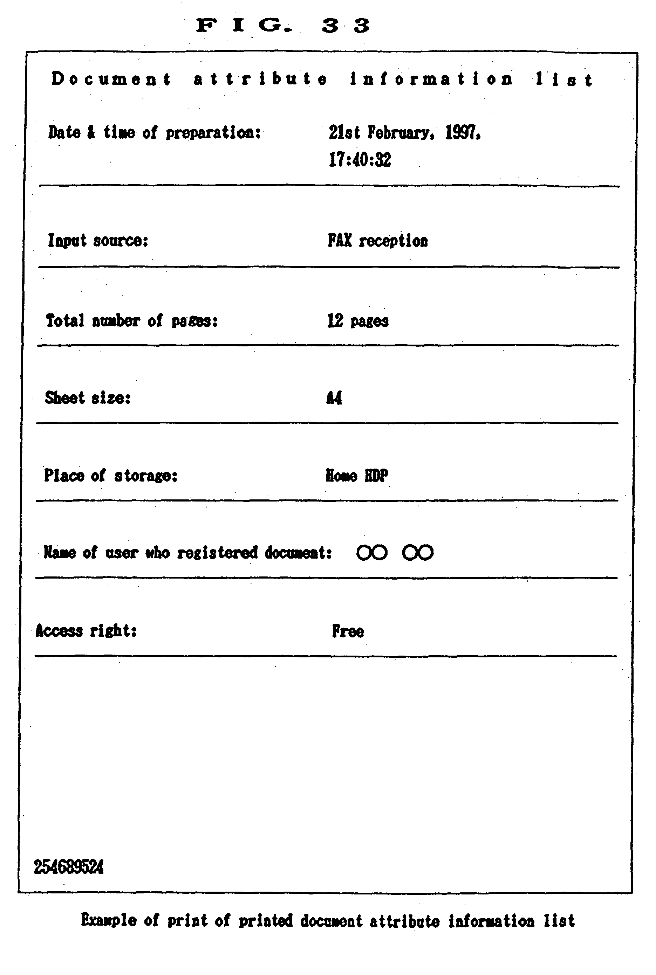

In the above explanation, the term "cover original" always meant a sheet provided with document ID mark on the first page of the document. However, as mode of cover original, a sheet indicating attributes of document provided with document ID mark as indicated in Fig. 33 is conceivable. In this case, the step of judging the last page of the flow chart and the step of setting document ID mark in the pattern synthesizing circuit 103 (step S34, step S35 in Fig. 11), for example, are omitted and, said cover original is printed after confirmation that no original is placed on the ADF 30. Namely, in the case where the judgement of step S37 in Fig. 11 is "NO", the document management means 3 reads out attribute data from the attribute management table T10, sets document ID mark on the pattern synthesizing circuit 103, and prints their combined image. Moreover, also in Fig. 12, the steps S43, S44 are omitted, and the printing of said combined image is executed between the step S46 and the step S47.

Moreover, in the above explanation was indicated only an example in which, as M (M: natural number) is set in the number of copies of whole document setting column in Fig. 20, the documentary image of a set of cover original and portions other than cover original is printed in M sets. However, a mode as described below is also conceivable for the number of prints in the present invention.

For example, the input picture of the control panel 92 is designed to have a column of "number of copies of whole document" specifying the number of copies of the whole document (from first page to last page of specified document) and a column of "number of copies of cover original" for setting the number of copies of cover original as shown in Fig. 25. Here, the user sets 0 as "number of copies of the whole document" in the case where he intends to take out the cover original, but sets 1 when he checks the contents, and sets M as "number of copies of cover original".

In the case of take-out of document, after executing the processing for identification of document by the procedure of Fig. 14 as described above, the processing moves to that of Fig. 15. Here, when the number of copies of whole document is other than 0, the step S154 (namely procedure of Fig. 12) is executed to print in the required number of copies. After finishing the printing in the set number of "number of copies of whole document", it is better to print out the cover page only or attribute data page only, combine it with the document ID mark, and set the prescribed number of copies. When not printing any document ID mark on the first page of the whole document, select "NO" in the column of "add mark" in Fig. 25.

This makes it possible for the user to obtain the whole document in required number of copies and the cover original.

While, in the above explanation, the dialogue type operating means (control panel 92 + input control means 92a) 10 was described as being provided on this digital integrated apparatus, the microcomputer connected through LAN may be endowed with that function for remote operation.

## Claims

1. A digital integrated apparatus for storing and printing documentary image data, the apparatus comprising:
printer means,
documentary image input means,
storing means for storing documentary image data input thereto from the input means, the documentary image data corresponding to a specific document, the documentary image data of the specific document having attached thereto by the apparatus data representing a document ID to uniquely identify the documentary image data of the specific document in the storing means,
document ID mark generating means for generating image data in respect of a unique document ID mark to be printed on the document, the document ID mark corresponding to the document ID data of the document,
document management means arranged to specify based on the document ID data a document to be printed by the printer means,
pattern synthesising means for synthesising the documentary image data corresponding to the document ID data specified by the document management means with the image data of the document ID mark corresponding to the document ID data specified by the document management means, into combined data representing a combined image to be printed by the printer means,
the apparatus being arranged such that the printer means is arranged to print part of the combined data, while simultaneously another part of the documentary image data of the same document is being input and stored in the storing means.

2. A digital integrated apparatus as defined in claim 1, wherein said documentary image input means is an image reading means.

3. A digital integrated apparatus as defined in claim 1, wherein said documentary image input means is a facsimile receiving means.

4. A digital integrated apparatus as defined in claim 1, wherein said documentary image input means is a printed image receiving means.

5. A digital integrated apparatus as defined in any of claims 1 to 4, wherein said documentary image with document ID mark is a documentary image corresponding to a specific page of said specific document.

6. A digital integrated apparatus as defined in any of claims 1 to 4, wherein said documentary image with document ID mark is a documentary image containing attribute information of said specific document.

7. A digital integrated apparatus as defined in any of Claims 1 to 6, wherein all of the pages of said specific document are printed with said documentary image with document ID mark.

8. A digital integrated apparatus as defined in any of Claims 1 to 6, wherein only said documentary image with document ID mark is printed.

9. A digital integrated apparatus as defined in Claim 8, wherein only said documentary image with document ID mark is printed at the time of transmission by facsimile of the documentary image read with the image reading means.

10. A digital integrated apparatus as defined in Claim 2, wherein the documentary image corresponding to said specific document is directly input in the pattern synthesising means, and then printed out from the printer means.

11. A digital integrated apparatus as defined in any of claims 2 to 4, wherein the documentary image corresponding to said specific document is input in the pattern synthesising means from the storing means, and then printed out from the printer means.

12. A digital integrated apparatus as defined in claim 2, wherein the documentary image of the first part is generated based on the documentary image data obtained from said documentary image input means, while the documentary image of the second part and after is generated based on the documentary image data stored in the storing means.

13. A digital integrated apparatus as defined in any of claims I to 12, wherein said document ID mark generating means is arranged to control the size of original and the direction of contents of document with said document management means in correspondence to said document ID and to input, when generating said document with document ID mark with the pattern synthesising means, its position information in the pattern synthesising means together with the document ID mark, and
said pattern synthesising means is arranged to determine the position of document ID mark based on said position information.

14. A digital integrated apparatus as defined in claim 13, wherein the size of original and the direction of contents of document managed by said document management means are input from an original size detecting means for detecting the size and direction of the original.

15. A digital integrated apparatus as defined in claim 13, wherein the size of original controlled by said document management means is input from an original size detecting means for detecting the size of the original, while the direction of contents of the document is input from a dialogue type operating means.

16. A digital integrated apparatus as defined in any of claims 1 to 15, further comprising a document ID deriving means for obtaining the document ID, by having a cover original with document ID mark read from the document image input means and decoding that ID mark.

17. A digital integrated apparatus as defined in claim 16, wherein said document ID mark generating means is arranged to add a document ID mark different from said read document ID mark on the documentary image printed by the printer means.

18. A digital integrated apparatus as defined in claim 16, wherein said document management means is arranged to register link information for linking the documentary image corresponding to the document ID obtained from said document ID deriving means to a documentary image corresponding to new document ID.

19. A digital integrated apparatus as defined in Claim 1, comprising a dialogue type operating means capable of judging whether or not to add the document ID mark to the documentary image obtained from said printer means.

20. A digital integrated apparatus as defined in any preceding claim wherein
said document ID management means is arranged to specify, for the purpose of retrieval for printing by the printer means, a documentary image corresponding to either the document ID data obtained from document ID deriving means or the document ID input as a character string directly from a dialogue type operating means.

21. A digital integrated apparatus as defined in claim 20, wherein said document ID mark generating means is arranged to control the size of original and the direction of contents of a document with said document management means in correspondence to said document ID data and inputting, when generating said document with document ID mark with the pattern synthesising means, its position information in the pattern synthesising means together with the document ID mark, and
said pattern synthesising means is arranged to determine the position of the document ID mark based on said position information.

22. A digital integrated apparatus as defined in claim 20 or 21, wherein said document management means controls copying or moving of target documentary image data from one specific type of storing means to another specific type of storing means.

23. A digital integrated apparatus as defined in claim 20, 21 or 22 wherein said document management means is arranged to transmit, upon receipt of document ID corresponding to a specific document, a plural number of pieces of attribute information mutually linked to said specific document, in the case where said document management means controls the link information indicating that one specific documentary image and another documentary image are related to each other in contents, and
said dialogue type operating means is arranged to display the attribute information obtained from said document management means to the user for selection so that the user may select the target documentary image.

24. A digital integrated apparatus as defined in any of claims 20 to 23, wherein said document management means controls combination for mutually combining a plural number of documentary image data.

25. A digital integrated apparatus as defined in claim 24, wherein said document management means generates in-document link information for mutually relating a plural number of documentary image data and registering it on an attribute management table.

26. A digital integrated apparatus as defined in any of claims 20 to 25, wherein said document management means controls deletion for deleting target documentary image data.

27. A digital integrated apparatus as defined in any of claims 20 to 26, wherein reuse of a deleted document ID is prohibited.

28. A digital integrated apparatus as defined in any of claims 20 to 27, comprising a facsimile receiving means as said documentary image input means, and
a facsimile transmitting means as output means, said document ID deriving means deriving the document ID mark attached to the documentary image received from the facsimile, and the document management means outputting image data corresponding to a specific document, based on the document ID obtained as a result of said derivation, to a facsimile in a distant place through said facsimile transmitting means.

29. A digital integrated apparatus as defined in claim 28, wherein said document ID mark generating means is arranged to generate a document ID mark in a readable size by reading the document ID attached to the documentary image received from the facsimile according to the user's instruction from the dialogue type operating means, and
said pattern synthesising means is arranged to synthesise said generated document ID mark with the target documentary image and transfer them to the output means.

30. A digital integrated apparatus as defined in claim 29, wherein said document ID mark generating means is arranged to generate a document ID mark and a corresponding document ID including password input according to the user's instruction from the dialogue type operating means.

31. A digital integrated apparatus as defined in any preceding claim, comprising a dialogue type operating means capable of setting the number of output copies for all pages of documentary image with document ID mark corresponding to specific documentary image and/or documentary image.

32. A digital integrated apparatus as defined in any of claims 15, 19 and 20 to 31, wherein said dialogue type operating means is connected to a LAN.

## Patentansprüche

1. Digitale integrierte Vorrichtung zum Speichern und Drucken von Dokument-Bilddaten, umfassend:
ein Druckermittel,
ein Dokument-Bildeingabemittel,
ein Speichermittel zum Speichern von aus dem Eingabemittel in dieses eingegebenen Dokument-Bilddaten, wobei die Dokument-Bilddaten einem spezifischen Dokument entsprechen, wobei die Vorrichtung an die Dokument-Bilddaten des spezifischen Dokuments Daten anknüpft, die eine Dokument-ID darstellen, um aie Dokument-Bilddaten des spezifischen Dokuments in dem Speichermittel eindeutig zu identifizieren,
ein Dokument-ID-Markierungserzeugungsmittel zum Erzeugen von Bilddaten bezüglich einer auf dem Dokument zu druckenden eindeutigen Dokument-ID-Markierung, wobei die Dokument-ID-Markierung den Dokument-ID-Daten des Dokuments entspricht,
ein Dokumentverwaltungsmittel, das so angeordnet ist, daß es auf der Basis der Dokument-ID-Daten ein durch das Druckermittel zu druckendes Dokument spezifiziert,
ein Mustersynthetisierungsmittel zum Synthetisieren der Dokument-Bilddaten, die den Dokument-ID-Daten entsprechen, die durch das Dokumentverwaltungsmittel spezifiziert werden, mit den Bilddaten der Dokument-ID-Markierung, die den Dokument-ID-Daten entsprechen, die durch das Dokumentverwaltungsmittel spezifiziert werden, zu kombinierten Daten, die ein durch das Druckermittel zu druckendes kombiniertes Bild darstellen,
wobei die Vorrichtung so angeordnet ist, daß das Druckermittel so angeordnet sind, daß es einen Teil der kombinierten Daten druckt, während gleichzeitig ein anderer Teil der Dokument-Bilddaten desselben Dokuments eingegeben und in dem Speichermittel gespeichert wird.

2. Digitale integrierte Vorrichtung nach Anspruch 1, wobei das Dokument-Bildeingabemittel ein Bildlesemittel ist.

3. Digitale integrierte Vorrichtung nach Anspruch 1, wobei das Dokument-Bildeingabemittel ein Faxempfangsmittel ist.

4. Digitale integrierte Vorrichtung nach Anspruch 1, wobei das Dokument-Bildeingabemittel ein Empfangsmittel für gedruckte Bilder ist.

5. Digitale integrierte Vorrichtung nach einem der Ansprüche 1 bis 4, wobei das Dokument-Bild mit Dokument-ID-Markierung ein Dokument-Bild ist, das einer spezifischen Seite des spezifischen Dokuments entspricht.

6. Digitale integrierte Vorrichtung nach einem der Ansprüche 1 bis 4, wobei das Dokument-Bild mit Dokument-ID-Markierung ein Dokument-Bild ist, das Attributinformationen des spezifischen Dokuments enthält.

7. Digitale integrierte Vorrichtung nach einem der Ansprüche 1 bis 6, wobei alle Seiten des spezifischen Dokuments mit dem Dokument-Bild mit Dokument-ID-Markierung gedruckt werden.

8. Digitale integrierte Vorrichtung nach einem der Ansprüche 1 bis 6, wobei nur das Dokument-Bild mit Dokument-ID-Markierung gedruckt wird.

9. Digitale integrierte Vorrichtung nach Anspruch 8, wobei zum Zeitpunkt der Übertragung per Fax des mit dem Bildlesemittel gelesenen Dokument-Bildes nur das Dokument-Bild mit Dokument-ID-Markierung gedruckt wird.

10. Digitale integrierte Vorrichtung nach Anspruch 2, wobei das dem spezifischen Dokument entsprechende Dokument-Bild direkt in das Mustersynthetisierungsmittel eingegeben und dann aus dem Druckermittel ausgedruckt wird.

11. Digitale integrierte Vorrichtung nach einem der Ansprüche 2 bis 4, wobei das dem spezifischen Dokument entsprechende Dokument-Bild aus dem Speichermittel in das Mustersynthetisierungsmittel eingegeben und dann aus dem Druckermittel ausgedruckt wird.

12. Digitale integrierte Vorrichtung nach Anspruch 2, wobei das Dokument-Bild des ersten Teils auf der Basis von aus dem Dokument-Bildeingabemittel erhaltenen Dokument-Bilddaten erzeugt wird, während. das Dokument-Bild des zweiten und späterer Teile auf der Basis von in dem Speichermittel gespeicherten Dokument-Bilddaten erzeugt wird.

13. Digitale integrierte Vorrichtung nach einem der Ansprüche 1 bis 12, wobei das. Dokument-ID-Markierungserzeugungsmittel so angeordnet ist, daß es die Originalgröße und die Richtung von Dokumentinhalten mit dem Dokumentverwaltungsmittel entsprechend der Dokument-ID steuert und bei der Erzeugung des Dokuments mit Dokument-ID-Markierung mit dem Mustersynthetisierungsmittel seine Positionsinformationen zusammen mit der Dokument-ID-Markierung in das Mustersynthetisierungsmittel eingibt und wobei das Mustersynthetisierungsmittel so angeordnet ist, daß es die Dokument-ID-Markierungsposition auf der Basis der Positionsinformationen bestimmt.

14. Digitale integrierte Vorrichtung nach Anspruch 13, wobei die durch das Dokumentverwaltungsmittel verwaltete Originalgröße und Richtung von Dokumentinhalten aus einem Originalgrößendetektionsmittel zum Erkennen der Größe und Richtung des Originals eingegeben werden.

15. Digitale integrierte Vorrichtung nach Anspruch 13, wobei die durch das Dokumentverwaltungsmittel verwaltete Originalgröße aus einem Originalgrößendetektionsmittel zum Erkennen der Größe des Originals eingegeben wird, während die Richtung von Inhalten des Dokuments aus einem Betriebsmittel des Dialogtyps eingegeben wird.

16. Digitale integrierte Vorrichtung nach einem der Ansprüche 1 bis 15, weiterhin mit einem Dokument-ID-Ableitungsmittel zum Erhalten der Dokument-ID, indem ein Deckoriginal mit Dokument-ID-Markierung aus dem Dokument-Bildeingabemittel gelesen und diese ID-Markierung decodiert wird.

17. Digitale integrierte Vorrichtung nach Anspruch 16, wobei das Dokument-ID-Markierungserzeugungsmittel so angeordnet ist, daß es eine von der gelesenen Dokument-ID-Markierung verschiedene Dokument-ID-Markierung auf dem durch das Druckermittel gedruckten Dokument-Bild hinzufügt.

18. Digitale integrierte Vorrichtung nach Anspruch 16, wobei das Dokumentverwaltungsmittel so angeordnet ist, daß es Verknüpfungsinformationen zum Verknüpfen des Dokument-Bildes, das der aus dem Dokument-ID-Ableitungsmittel erhaltenen Dokument-ID entspricht, mit einem Dokument-Bild, das neuer Dokument-ID entspricht, registriert.

19. Digitale integrierte Vorrichtung nach Anspruch 1, mit einem Betriebsmittel des Dialogtyps, das entscheiden kann, ob die Dokument-ID-Markierung zu dem aus dem Druckermittel erhaltenen Dokument-Bild hinzugefügt werden soll oder nicht.

20. Digitale integrierte Vorrichtung nach einem der vorhergehenden Ansprüche, wobei
das Dokumentverwaltungsmittel so angeordnet ist, daß es zum Zwecke des Abrufens zum Drucken durch das Druckermittel ein Dokument-Bild spezifiziert, das entweder den aus dem Dokument-ID-Ableitungsmittel erhaltenen Dokument-ID-Daten oder der direkt als Zeichenkette aus dem Betriebsmittel des Dialogtyps eingegebenen Dokument-ID entspricht.

21. Digitale integrierte Vorrichtung nach Anspruch 20, wobei das Dokument-ID-Markierungserzeugungsmittel so angeordnet ist, daß es die Originalgröße und die Richtung von Inhalten eines Dokuments mit dem Dokumentverwaltungsmittel entsprechend den Dokument-ID-Daten steuert und bei der Erzeugung des Dokuments mit Dokument-ID-Markierung mit dem Mustersynthetisierungsmittel seine Positionsinformationen zusammen mit der Dokument-ID-Markierung in das Mustersynthetisierungsmittel eingibt und
wobei das Mustersynthetisierungsmittel so angeordnet ist, daß es die Position der Dokument-ID-Markierung auf der Basis der Positionsinformationen bestimmt.

22. Digitale integrierte Vorrichtung nach Anspruch 20 oder 21, wobei das Dokumentverwaltungsmittel das Kopieren oder Umlegen von Zieldokumentbilddaten aus einem Speichermitteltyp zu einem anderen spezifischen Speichermitteltyp steuert.

23. Digitale integrierte Vorrichtung nach Anspruch 20, 21 oder 22, wobei das Dokumentverwaltungsmittel so angeordnet ist, daß es bei Empfang einer Dokument-ID, die einem spezifischen Dokument entspricht, mehrere, wechselseitig mit dem spezifischen Dokument verknüpfte Attributinformationsstücke sendet, falls das Dokumentverwaltungsmittel die Verknüpfungsinformationen steuert, die anzeigen, daß ein spezifisches Dokument-Bild und ein anderes Dokument-Bild bezüglich Inhalten miteinander verwandt sind, und
wobei das Betriebsmittel des Dialogtyps so angeordnet ist, daß es dem Benutzer die aus dem Dokumentverwaltungsmittel erhaltenen Attributinformationen zur Auswahl anzeigt, so daß der Benutzer das Ziel-Dokument-Bild auswählen kann.

24. Digitale integrierte Vorrichtung nach einem der Ansprüche 20 bis 23, wobei das Dokumentverwaltungsmittel Kombination für das wechselseitige Kombinieren mehrerer Dokument-Bilddaten steuert.

25. Digitale integrierte Vorrichtung nach Anspruch 24, wobei das Dokument verwaltungsmittel Im-Dokument-Verknüpfungsinformationen zum wechselseitigen Inbeziehungsetzen mehrerer Dokument-Bilddaten erzeugt und diese in einer Attributverwaltungstabelle registriert.

26. Digitale integrierte Vorrichtung nach einem der Ansprüche 20 bis 25, wobei das Dokumentverwaltunasmittel Löschung zum Löschen von Zieldokumentbilddaten steuert.

27. Digitale integrierte Vorrichtung nach einem der Ansprüche 20 bis 26, wobei eine Wiederverwendung einer gelöschten Dokument-ID verboten ist.

28. Digitale integrierte Vorrichtung nach einem der Ansprüche 20 bis 27, mit einem Faxempfangsmittel als das Dokument-Bildeingabemittel und
einem Faxsendemittel als Ausgabemittel, wobei das Dokument-ID-Ableitungsmittel die an das aus dem Fax empfangene Dokument-Bild angeknüpfte Dokument-ID-Markierung ableitet und das Dokumentverwaltungsmittel einem spezifischen Dokument entsprechende Bilddaten auf der Basis der als Ergebnis der Ableitung erhaltenen Dokument-ID durch das Faxsendemittel an ein Fax an einem fernen Ort ausgibt.

29. Digitale integrierte Vorrichtung nach Anspruch 28, wobei das Dokument-ID-Markierungserzeugungsmittel so angeordnet ist, daß es gemäß den Anweisungen des Benutzers aus dem Betriebsmittel des Dialogtyps durch Lesen der Dokument-ID, die an das Dokument-Bild angeknüpft sind, das aus dem Fax empfangen wird, eine Dokument-ID-Markierung in einer lesbaren Größe erzeugt und
das Mustersynthetisierungsmittel so angeordnet ist, daß es die erzeugte Dokument-ID-Markierung mit dem Ziel-Dokument-Bild synthetisiert und diese zu dem Ausgabemittel transferiert.

30. Digitale integrierte Vorrichtung nach Anspruch 29, wobei das Dokument-ID-Markierungserzeugungsmittel so angeordnet ist, daß es gemäß den Anweisungen des Benutzers aus dem Betriebsmittel des Dialogtyps eine Dokument-ID-Markierung und eine entsprechende Dokument-ID einschließlich Passworteingabe erzeugt.

31. Digitale integrierte vorrichtung nach einem der vorhergehenden Ansprüche, mit einem Betriebsmittel des Dialogtyps, das die Anzahl von Ausgabekopien für alle Dokument-Bild-Seiten mit Dokument-ID-Markierung, die einem spezifischen Dokument-Bild und/oder einem Dokument-Bild entsprechen, einstellen kann.

32. Digitale integrierte Vorrichtung nach einem der Ansprüche 15, 19 und 20 bis 31, wobei das Betriebsmittel des Dialogtyps mit einem LAN verbunden ist.

## Revendications

1. Appareil intégré numérique destiné à stocker et imprimer des données d'image documentaire, l'appareil comprenant :
des moyens d'impression,
des moyens d'entrée d'image documentaire,
des moyens de stockage destinés à stocker des données d'image documentaire entrées dans ces moyens à partir des moyens d'entrée, les données d'image documentaire correspondant à un document spécifique, les données d'image documentaire du document spécifique étant liées à celui-ci par les données de l'appareil représentant une identification (ID) de document afin d'identifier de manière unique les données d'image documentaire du document spécifique dans les moyens de stockage,
des moyens générant une marque d'identification de document destinés à générer des données d'image se rapportant à une marque unique d'identification de document à imprimer sur le document, la marque d'identification de document correspondant aux données de l'identification du document,
des moyens de gestion de document agencés pour spécifier, sur la base des données de l'identification de document, un document devant être imprimé par les moyens d'impression,
des moyens de synthèse de motif destinés à synthétiser les données d'image documentaire, correspondant aux données d'identification de document spécifiées par les moyens de gestion de document, avec les données d'image de la marque d'identification de document, correspondant aux données de l'identification de document spécifiées par les moyens de gestion de document, en des données combinées représentant une image combinée devant être imprimée par les moyens d'impression,
l'appareil étant agencé de façon que les moyens d'impression soient agencés pour imprimer une partie des données combinées, tandis que, en même temps, une autre partie des données d'image documentaire du même document est entrée et stockée dans les moyens de stockage.

2. Appareil intégré numérique selon la revendication 1, dans lequel lesdits moyens d'entrée d'image documentaire sont des moyens de lecture d'image.

3. Appareil intégré numérique selon la revendication 1, dans lequel lesdits moyens d'entrée d'image documentaire sont des moyens de réception de télécopie.

4. Appareil intégré numérique selon la revendication 1, dans lequel lesdits moyens d'entrée d'image documentaire sont des moyens de réception d'image imprimée.

5. Appareil intégré numérique selon l'une quelconque des revendications 1 a 4, dans lequel ladite image documentaire avec la marque d'identification de document est une image documentaire correspondant à une page spécifique dudit document spécifique.

6. Appareil intégré numérique selon l'une quelconque des revendications 1 à 4, dans lequel ladite image documentaire avec la marque d'identification de document est une image documentaire contenant des informations d'attribut dudit document spécifique.

7. Appareil intégré numérique selon l'une quelconque des revendications 1 à 6, dans lequel toutes les pages dudit document spécifique sont imprimées avec ladite image documentaire avec la marque d'identification de document.

8. Appareil intégré numérique selon l'une quelconque des revendications 1 à 6, dans lequel seule ladite image documentaire avec la marque d'identification de document est imprimée.

9. Appareil intégré numérique selon la revendication 8, dans lequel seule ladite image documentaire avec la marque d'identification de document est imprimée au moment de la transmission par le télécopieur de l'image documentaire lue avec les moyens de lecture d'image.

10. Appareil intégré numérique selon la revendication 2, dans lequel l'image documentaire correspondant au dit document spécifique est entrée directement dans les moyens de synthèse de motif, et ensuite imprimée par les moyens d'impression.

11. Appareil intégré numérique selon l'une quelconque des revendications 2 à 4, dans lequel l'image documentaire correspondant au dit document spécifique est entrée dans les moyens de synthèse de motif à partir des moyens de stockage, et ensuite imprimée par les moyens d'impression.

12. Appareil intégré numérique selon la revendication 2, dans lequel l'image documentaire de la première partie est générée sur la base des données d'image documentaire obtenues à partir desdits moyens d'entrée d'image documentaire, tandis que l'image documentaire de la deuxième partie et des parties suivantes est générée sur la base des données d'image documentaire stockées dans les moyens de stockage.

13. Appareil intégré numérique selon l'une quelconque des revendications 1 à 12, dans lequel lesdits moyens de génération de marque d'identification de document sont agencés afin de commander le format de l'original et l'orientation du contenu du document avec lesdits moyens de gestion de document en correspondance à ladite identification de document et afin d'entrer, lorsque ledit document avec la marque d'identification de document est généré avec les moyens de synthèse de motif, ses informations de position dans les moyens de synthèse de motif conjointement à la marque d'identification de document, et
lesdits moyens de synthèse de motif sont agencés afin de déterminer la position de la marque d'identification de document sur la base desdites informations de position.

14. Appareil intégré numérique selon la revendication 13, dans lequel le format de l'original et l'orientation du contenu du document géré par lesdits moyens de gestion de document sont entrés à partir des moyens de détection du format de l'original afin de détecter le format et l'orientation de l'original.

15. Appareil intégré numérique selon la revendication 13, dans lequel le format de l'original commandé par lesdits moyens de gestion de document est entré à partir des moyens de détection du format de l'original destinés à détecter le format de l'original, tandis que l'orientation du contenu du document est entrée à partir des moyens de traitement de type de dialogue.

16. Appareil intégré numérique selon l'une quelconque des revendications 1 à 15, comprenant en outre des moyens de déduction d'identification de document afin d'obtenir l'identification de document, en ayant une page de garde originale avec la marque d'identification de document lue à partir des moyens d'entrée d'image documentaire et afin de décoder cette marque d'identification.

17. Appareil intégré numérique selon la revendication 16, dans lequel lesdits moyens de génération de marque d'identification de document sont agencés afin d'ajouter une marque d'identification de document différente de ladite marque d'identification de document lue sur l'image documentaire imprimée par les moyens d'impression.

18. Appareil intégré numérique selon la revendication 16, dans lequel lesdits moyens de gestion de document sont agencés afin d'enregistrer des informations de lien destinées à relier l'image documentaire, correspondant à l'identification de document obtenue à partir desdits moyens de déduction d'identification de document, à une image documentaire correspondant à la nouvelle identification de document.

19. Appareil intégré numérique selon la revendication 1, comprenant des moyens de traitement de type de dialogue capables de juger si la marque d'identification de document sera ajoutée ou non à l'image documentaire obtenue à partir desdits moyens d'impression.

20. Appareil intégré numérique selon l'une quelconque des revendications précédentes, dans lequel lesdits moyens de gestion d'identification de document sont agencés afin de spécifier, dans le but de recherche à des fins d'impression par les moyens d'impression, une image documentaire correspondant, soit aux données de l'identification de document obtenu à partir des moyens de déduction d'identification de document, soit à l'identification de document entré directement sous forme d'une chaîne de caractères à partir des moyens de traitement de type de dialogue.

21. Appareil intégré numérique selon la revendication 20, dans lequel lesdits moyens de génération de marque d'identification de document sont agencés afin de commander le format de l'original et l'orientation du contenu d'un document avec lesdits moyens de gestion de document en correspondance avec lesdites données de l'identification de document et afin d'entrer, lorsque ledit document avec la marque d'identification est généré avec les moyens de synthèse de motif, ses informations de position dans les moyens de synthèse de motif conjointement à la marque d'identification de document, et
lesdits moyens de synthèse de motif sont agencés afin de déterminer la position de la marque d'identification de document sur la base desdites informations de position.

22. Appareil intégré numérique selon la revendication 20 ou 21, dans lequel lesdits moyens de gestion de document commandent la copie ou le déplacement des données d'image documentaire cible depuis un type spécifique de moyens de stockage vers un autre type spécifique de moyens de stockage.

23. Appareil intégré numérique selon la revendication 20, 21 ou 22 dans lequel lesdits moyens de gestion de document sont agencés afin de transmettre, à la réception de l'identification de document correspondant à un document spécifique, un nombre multiple d'éléments d'informations d'attribut reliés réciproquement au dit document spécifique, dans le cas où lesdits moyens de gestion de document commandent les informations de lien indiquant qu'une image documentaire spécifique et une autre image documentaire se rapportent l'une à l'autre quant à leur contenu, et
lesdits moyens de traitement de type de dialogue sont agencés afin d'afficher à l'utilisateur les informations d'attribut, obtenues à partir desdits moyens de gestion de document, à des fins de sélection de manière que l'utilisateur puisse sélectionner l'image documentaire cible.

24. Appareil intégré numérique selon l'une quelconque des revendications 20 à 23, dans lequel lesdits moyens de gestion de document commandent la combinaison en de combiner entre elles un nombre multiple de données d'image documentaire.

25. Appareil intégré numérique selon la revendication 24, dans lequel lesdits moyens de gestion de document génèrent des informations de lien internes au document afin de rattacher entre elles un nombre multiple de données d'image documentaire et afin de les enregistrer dans une table de gestion d'attributs.

26. Appareil intégré numérique selon l'une quelconque des revendications 20 à 25, dans lequel lesdits moyens de gestion de document commandent la suppression afin de supprimer les données d'image documentaire cible.

27. Appareil intégré numénque selon l'une quelconque des revendications 20 à 26, dans lequel la réutilisation d'une identification de document supprimée est interdite.

28. Appareil intégré numérique selon l'une quelconque des revendications 20 à 27, comprenant des moyens de réception de télécopie comme lesdits moyens d'entrée d'image documentaire, et
des moyens d'émission de télécopie comme moyens de sortie, lesdits moyens de déduction d'identification de document déduisant la marque d'identification de document jointe à l'image documentaire reçue par le télécopieur, et les moyens de gestion de document sortant des données d'image, correspondant à un document spécifique sur la base de l'identification de document qui est le résultat obtenu de ladite déduction, vers un télécopieur situé à un lieu distant par le biais des moyens d'émission de télécopie.

29. Appareil intégré numérique selon la revendication 28, dans lequel lesdits moyens de génération de marque d'identification de document sont agencés afin de générer une marque d'identification de document avec un format lisible en lisant l'identification de document jointe à l'image documentaire reçue par le télécopieur conformément à l'instruction de l'utilisateur provenant des moyens de traitement de type de dialogue, et
lesdits moyens de synthèse de motif sont agencés afin de synthétiser ladite marque d'identification de document générée avec l'image documentaire cible et afin de les transférer aux moyens de sortie.

30. Appareil intégré numérique selon la revendication 29, dans lequel lesdits moyens de génération de marque d'identification de document sont agencés afin de générer une marque d'identification de document et une identification de document correspondante comprenant un mot de passe saisi selon l'instruction de l'utilisateur provenant des moyens de traitement de type de dialogue.

31. Appareil intégré numérique selon l'une quelconque des revendications précédentes, comprenant des moyens de traitement de type de dialogue capables de définir le nombre de copies de sortie pour toutes les pages d'image documentaire avec marque d'identification de document correspondant à l'image documentaire spécifique et/ou l'image documentaire.

32. Appareil intégré numérique selon l'une quelconque des revendications 15, 19 et 20 à 31, dans lequel lesdits moyens de traitement de type de dialogue sont connectés à un réseau local LAN.
